(19) Europäisches Patentamt / European Patent Office / Office européen des brevets

(11) **EP 4 674 896 A1**

(12) **EUROPEAN PATENT APPLICATION**
published in accordance with Art. 153(4) EPC

(43) Date of publication:
**07.01.2026 Bulletin 2026/02**

(21) Application number: **24763768.9**

(22) Date of filing: **22.02.2024**

(51) International Patent Classification (IPC):
**C08J 5/18** (2006.01)       **B32B 7/025** (2019.01)
**B32B 15/09** (2006.01)       **B32B 27/36** (2006.01)
**H01G 9/048** (2006.01)       **H01G 11/68** (2013.01)
**H01M 4/66** (2006.01)

(52) Cooperative Patent Classification (CPC):
**B32B 7/025; B32B 15/09; B32B 27/36; C08J 5/18; H01G 9/048; H01G 11/68; H01M 4/66;** Y02E 60/10

(86) International application number:
**PCT/JP2024/006459**

(87) International publication number:
**WO 2024/181287 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029449**
**28.02.2023 JP 2023029451**
**28.02.2023 JP 2023029452**
**30.11.2023 JP 2023202422**

(71) Applicant: **Toray Industries, Inc.**
**Tokyo 103-8666 (JP)**

(72) Inventors:
• **SENDAI, Toshihiro**
  **Otsu-shi, Shiga 520-8558 (JP)**
• **NITTA, Yuya**
  **Otsu-shi, Shiga 520-8558 (JP)**
• **HIGASHIOJI, Takuji**
  **Otsu-shi, Shiga 520-8558 (JP)**

(74) Representative: **Kador & Partner Part mbB**
**Corneliusstraße 15**
**80469 München (DE)**

(54) **POLYESTER FILM, RESIN CURRENT-COLLECTOR, RESIN CURRENT-COLLECTOR FOR BIPOLAR BATTERY, ELECTRODE FOR HYPERBOLIC BATTERY, ENERGY STORAGE ELEMENT, SECONDARY BATTERY, ELECTRIC VEHICLE, AND ELECTRIC FLYING OBJECT**

(57)    The objects of the present invention are to provide a polyester film that has excellent electrical conductivity, uniform in-plane electrical conductivity in the thickness direction of the film, and little decrease in electrical conductivity due to processing, and a resin current collector for bipolar batteries that has little variation in battery characteristics, and the present invention attains the objects by providing the polyester film satisfying the following (1) to (3):

(1) a volume resistivity at 23°C and 65% RH is $1.0 \times 10^0$ $\Omega$cm or more and less than $1.0 \times 10^8$ $\Omega$cm;
(2) a film thickness is 1 $\mu$m or more and less than 500 $\mu$m; and
(3) the polyester film comprises a polyester resin layer (layer P1) containing 1.0% by mass or more and 30% by mass or less of conductive particles, and the conductive particles are carbon materials.

**EP 4 674 896 A1**

## Description

Technical Field

The present invention relates to a polyester film, a resin current collector, a resin current collector for a bipolar battery, an electrode for a bipolar battery, a power storage device, a secondary battery, an electric vehicle, and an electric flying object.

Background Art

Polyester resins are used in a variety of industrial fields due to their good processability. In addition, film-like products processed from these polyester resins in film form (polyester films) play an important role in today's life, including industrial applications, optical product applications, packaging applications, and magnetic recording tape applications.

In recent years, there has been a pressing desire to reduce carbon dioxide emissions for environmental protection. The automotive industry has high expectations for reducing carbon dioxide emissions through the introduction of electric vehicles (EVs) and hybrid electric vehicles (HEVs), and the development of secondary batteries for motor drives, which hold the key to their practical application, is being diligently pursued. Examples of secondary batteries include lithium ion batteries that can achieve high energy density and high power density, as well as next-generation batteries such as lithium negative electrode batteries using a metallic lithium negative electrode, all-solid-state batteries, and air batteries. In addition to automobiles, drones, flying vehicles, and flying communication base stations are being developed as next-generation mobility devices, and there is a strong demand for lightweight, high-energy density secondary batteries.

In secondary batteries such as lithium ion batteries, metal foils (metal current collector foils) have conventionally been used as current collectors. In recent years, however, resin film current collectors composed of resin films in place of metal foils have been proposed. The resin film current collector is lighter than the metal current collector foil, and is expected to improve the output per unit weight of the battery.

In recent years, bipolar lithium ion batteries have been actively developed as compact, high power lithium-ion batteries. Unlike conventional lithium ion batteries, in which the current generated in a battery cell is taken out from an electrode tab attached to the end of the current collector foil and connects multiple battery cells, a bipolar lithium ion battery has a configuration in which multiple power-generating cells are laminated through the current collector foils arranged on the outermost layer, and current flows in the thickness direction of the foil. By adopting the above-mentioned configuration, it is possible to eliminate the electrode terminals, wiring, and exterior body for protecting the battery cells that are present in the conventional batteries, which significantly reduces the battery size. In addition, the current that previously flowed in the surface direction of the current collector foil flows more in the thickness direction of the current collector foil, thereby reducing the resistance to the flowing current and increasing the battery output.

On the other hand, in order to produce a film current collector foil for bipolar batteries, it is necessary to impart electrical conductivity in the thickness direction.

For example, Patent Literatures 1 to 3 disclose materials for resin current collectors including a polyolefin resin or an imide group-containing resin as a main component and containing a conductive filler at a high concentration, and resin current collectors that contain the materials for resin current collectors, for use in bipolar resin current collectors.

Citation List

Patent Literature

Patent Literature 1: WO 2011/092938
Patent Literature 2: JP 2019-179732 A
Patent Literature 3: WO 2015/005116

Summary of Invention

Technical Problem

Patent Literatures 1 to 3 disclose resin current collectors using polyolefin films or imide group-containing resins, which is used as a reference to produce a resin current collector using a polyester film from the viewpoint of heat resistance and dimensional stability. As a result, it was found that while the current value generated in the battery cell when used as a current collector for a secondary battery is excellent, the in-plane electrical conductivity of the polyester film is not uniform and the electrical conductivity may decrease when the film is tensioned or bent to produce the current collector, resulting in problems of variation generated in the performance of the battery cells produced.

The present invention aims to provide a polyester film that has excellent electrical conductivity, uniform in-plane electrical conductivity in the thickness direction of the film, and little decrease in electrical conductivity due to processing, and a resin current collector for bipolar batteries that has little variation in battery characteristics.

Solution to Problem

In order to solve the above problems, a preferred aspect of the present invention adopts the following configuration:

[I] A polyester film satisfying the following (1) to (3):

(1) a volume resistivity at 23°C and 65% RH is $1.0 \times 10^0$ Ωcm or more and less than $1.0 \times 10^8$ Ωcm;
(2) a film thickness is 1 μm or more and less than 500 μm; and
(3) the polyester film includes a polyester resin layer (layer P1) containing 1.0% by mass or more and 30% by mass or less of conductive particles, and the conductive particles are carbon materials.

[II] A polyester film satisfying the following (1') to (3'):

(1') a film thickness is 1 μm or more and less than 500 μm;
(2') the polyester film includes a polyester resin layer (layer P1) containing 1.0% by mass or more and 30% by mass or less of conductive particles; and
(3') the layer P1 includes conductive particles C1' having an aspect ratio of 1 or more and less than 5 and conductive particles C2' having an aspect ratio of 5 or more.

[III] The polyester film according to [II], wherein the layer P1 satisfies the following (4) to (6):

(4) the conductive particles contained in the layer P1 are carbon materials;
(5) the layer P1 includes 0.01% by mass or more and 10% by mass or less of a compound having an ether bond in its main chain; and
(6) the layer P1 includes two or more polyester resins having different melting points.

[IV] The polyester film according to [III], satisfying the following (7):
(7) the layer P1 is at least one of the outermost layers of the polyester film, and the layer P1 includes a layer including as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

[V] The polyester film according to any one of [I] to [IV], wherein the conductive particles are carbon materials, a volume-based average dispersed particle size of the carbon materials contained in the polyester film is 0.15 μm or more and 0.90 μm or less, and the number of the dispersed particles is 1.5 particles/μm$^2$ or more and 5.0 particles/μm$^2$ or less.

[VI] The polyester film according to any one of [I] to [V], wherein the conductive particles are carbon materials, and 100% by mass of the carbon materials contain one or more selected from Ketjen black, carbon nanotubes, and acetylene black in a total amount of 80% by mass or more.

[VII] The polyester film according to any one of [I] to [VI], wherein the layer P1 includes at least two types of conductive particles that are conductive particles C1' having an aspect ratio of 1 or more and less than 5 and conductive particles C2' having an aspect ratio of 5 or more, and a ratio of an area (SC1') occupied by the conductive particles C1' to an area (SC2') occupied by the conductive particles C2' in the layer P1 is 0.5 times or more and 5 times or less, as determined by the following methods:

<Method of measuring area occupied by each conductive particle>

A cross-sectional image (dimension in image: 18.5 μm in length × 25 μm in width) observed at a magnification of 5,000 times using a scanning electron microscope (JSM-6700 manufactured by JEOL Ltd.) is analyzed as follows using an image analysis software (Image-Pro Plus Version 4.0 for "Windows" (registered trademark) created by Planetron Corporation)

(i) Image analysis conditions

After the cross-sectional image is captured using the software, 8-bit grayscale processing is performed by executing the 'Gray Scale 8' command under the 'Convert' menu. Then, at the 'Spatial Calibration' command under the 'Calibration' menu, the width of the captured image is set to 25 $\mu$m. Thereafter, the binarization processing is performed using the 'Binarization' command under the 'Process' menu.

(Binarization Processing Condition)

- '3 $\times$ 3' is selected
- Threshold setting: The automatic detection button to the right of the numerical entry field is pressed once, and the resulting value is used.
- Preview conditions: The background is displayed as white, and the detected particles are displayed as black.

After the binarization processing, 'Count/Size' command screen under the 'Measure' menu is opened to set the following particle detection conditions and particle analysis conditions, and 'Count' is executed to analyze the detected particles.

(Particle Detection Conditions)

- Intensity Range Selection: 'Automatic Dark Objects' is selected.
- 'Measure Objects' is checked for selection.

(Object Extraction Option)

- 4-Connect/8-Connect: 4-Connect is selected
- Only 'Pre-Filter' and 'Fill holes' are checked for selection
- Smoothing: 0
- Clean Borders: 'All Borders' is selected.

(Particle Analysis Conditions)

An aspect ratio and area of each conductive particle are determined in an image obtained using an aspect ratio (Aspect value) and area (Area value) in the 'Count/Size' command screen from the obtained image.
For five different fields of view, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the conductive particles (conductive particles C1') existing in the region where the aspect ratio is 1 or more and less than 5. When a plurality of local maximum values exist in the region where the aspect ratio is 1 or more and less than 5, the weighted average value using the vertical axis values shall be the aspect ratio of the conductive particles (conductive particles C1') existing in the region where the aspect ratio is 1 or more and less than 5.
Similarly, when a local maximum value exists in the region where the aspect ratio is 5 or more, the local maximum value shall be the aspect ratio of the conductive particles (conductive particles C2') existing in the region where the aspect ratio is 5 or more. When a plurality of local maximum values exist in the region where the aspect ratio is 5 or more, the weighted average value using the vertical axis values shall be the aspect ratio of the conductive particles (conductive particles C2') existing in the region where the aspect ratio is 5 or more.
For each of the five different fields of view, the aspect ratios of the conductive particles (conductive particles C1') existing in the region where the aspect ratio is 1 or more and less than 5 and the conductive particles (conductive particles C2') existing in the region where the aspect ratio is 5 or more are determined, and average values of the five fields of view in the regions shall be the aspect ratios of the conductive particles C1' and the conductive particles C2', respectively, in the polyester film.

The sum of the area (SC1') of the conductive particles (conductive particles C1') existing in the region where the aspect ratio is 1 or more and less than 5 as confirmed by the count histogram described above is determined. Subsequently, the sum of the area (SC2') of the conductive particles (conductive particles C2') existing in the region where the aspect ratio is 5 or more is determined, and the value obtained by dividing the SC1' by the SC2' is considered as the ratio of the area (SC1') occupied by the conductive particles C1' to the area (SC2') occupied by the conductive particles C2' in the layer P1 included in the sample.

[VIII] The polyester film according to any one of [I] to [VII], wherein the layer P1 includes at least two types of carbon materials that are carbon material C1 having an aspect ratio of 1 or more and less than 5 and carbon material C2 having an aspect ratio of 5 or more, and a ratio of an area (SC1') occupied by the carbon material C1 to an area (SC2') occupied by the carbon material C2 in the layer P1 is 0.5 times or more and 5 times or less, as determined by the following methods:

<Method of measuring area occupied by each conductive particle>

A cross-sectional image (dimension in image: 18.5 $\mu$m in length $\times$ 25 $\mu$m in width) observed at a magnification of 5,000 times using a scanning electron microscope (JSM-6700 manufactured by JEOL Ltd.) is analyzed as follows using an image analysis software (Image-Pro Plus Version 4.0 for "Windows" (registered trademark) created by Planetron Corporation)

(i) Image analysis conditions

After the cross-sectional image is captured using the software, 8-bit grayscale processing is performed by executing the 'Gray Scale 8' command under the 'Convert' menu. Then, at the 'Spatial Calibration' command under the 'Calibration' menu, the width of the captured image is set to 25 $\mu$m. Thereafter, the binarization processing is performed using the 'Binarization' command under the 'Process' menu.

(Binarization Processing Condition)

- '3 $\times$ 3' is selected
- Threshold setting: The automatic detection button to the right of the numerical entry field is pressed once, and the resulting value is used.
- Preview conditions: The background is displayed as white, and the detected particles are displayed as black.

After the binarization processing, 'Count/Size' command screen under the 'Measure' menu is opened to set the following particle detection conditions and particle analysis conditions, and 'Count' is executed to analyze the detected particles.

(Particle Detection Conditions)

- Intensity Range Selection: 'Automatic Dark Objects' is selected.
- 'Measure Objects' is checked for selection.

(Object Extraction Option)

- 4-Connect/8-Connect: 4-Connect is selected
- Only 'Pre-Filter' and 'Fill holes' are checked for selection
- Smoothing: 0
- Clean Borders: 'All Borders' is selected.

(Particle Analysis Conditions)

An aspect ratio and area of each conductive particle are determined in an image obtained using an aspect ratio (Aspect value) and area (Area value) in the 'Count/Size' command screen from the obtained image.

For five different visual fields, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the carbon material (carbon material C1) existing in the region where the aspect ratio is 1 or more and less than 5. When a plurality of local maximum values exist in the region where the aspect ratio is 1 or more and less than 5, the weighted average value using the vertical axis values shall be the aspect ratio of the carbon material (carbon material C1) existing in the region where the aspect ratio is 1 or more and less than 5.

Similarly, when a local maximum value exists in the region where the aspect ratio is 5 or more, the local maximum value shall be the aspect ratio of the carbon material (carbon material C2) existing in the region where the aspect ratio is 5 or more. When a plurality of local maximum values exist in the region where the aspect ratio is 5 or more, the weighted average value using the vertical axis values shall be the aspect ratio of the carbon material (carbon material C2) existing in the region where the aspect ratio is 5 or more.

For each of the five different fields of view, the aspect ratios of the carbon material (carbon material C1) existing in the region where the aspect ratio is 1 or more and less than 5 and the carbon material (carbon material C2) existing in the region where the aspect ratio is 5 or more are determined, and average values of the five fields of view in the regions shall be the aspect ratios of the carbon material C1 and the carbon material C2, respectively, in the polyester film.

The sum of the area (SC1) of the carbon material (carbon material C1) existing in the region where the aspect ratio is 1 or more and less than 5 as confirmed by the count histogram described above is determined. Subsequently, the sum of the area (SC2) of the carbon material (carbon material C2) existing in the region where the aspect ratio is 5 or more is determined, and the value obtained by dividing the SC1 by the SC2 is considered as the ratio of the area (SC1) occupied by the carbon material C1 to the area (SC2) occupied by the carbon material C2 in the layer P1 included in the sample.

[IX] The polyester film according to any one of [I] to [VIII], wherein the layer P1 includes at least two polyester resins having different melting points.

[X] The polyester film according to any one of [I] to [III], wherein the layer P1 includes as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

[XI] The polyester film according to any one of [I] to [X], wherein the conductive particles are carbon materials, a polyester resin layer (layer P2) with a carbon material content lower than that in the layer P1 is provided on at least one side of the layer P1 as the outermost layer of the polyester film, and the following relation is satisfied:

$$M_{P1} - M_{P2} \geq 0.1$$

where $M_{P1}$ (% by mass) is a carbon material content in the layer P1, and $M_{P2}$ (% by mass) is a carbon material content in the layer P2.

[XII] The polyester film according to [XI], wherein the layer P2 includes as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

[XIII] The polyester film according to any one of [I] to [XII], wherein the layer P1 includes 0.01% by mass or more and 10 % by mass or less of the compound having an ether bond in its main chain.

[XIV] The polyester film according to any one of [I] to [XIII], wherein the polyester film is uniaxially oriented or biaxially oriented.

[XV] The polyester film according to any one of [I] to [XIV], wherein the breaking strength of the film in at least one of the in-plane longitudinal direction and the in-plane width direction is 60 MPa or more and 300 MPa or less.

[XVI] A laminated polyester film including at least a layer composed of a metal and/or metal-based compound, the polyester film according to any one of [I] to [XV], and a layer composed of a metal and/or metal-based compound in this order.

[XVII] The laminated polyester film according to [XVI], satisfying the following (8): (8) A laminated polyester film includes at least a layer composed of a metal and/or metal-based compound, the polyester film according to claim 4, and a layer composed of a metal and/or metal-based compound in this order, wherein the outermost layers on both sides of the polyester film are the layers P1, and the layer composed of the metal and/or metal-based compound is provided on each of the surfaces on both sides of the layer P1.

[XVIII] The laminated polyester film according to [XVI] or [XVII], wherein the layer composed of the metal and/or metal-based compound on the surface on one side contains aluminum element, and the layer composed of the metal and/or metal-based compound on the surface on the opposite side contains copper element.

[XIX] The laminated polyester film according to [XVIII], wherein the layer composed of the metal and/or metal-based compound containing copper element is in contact with the layer including as a main component a polyester resin (resin $\alpha$) containing a dicarboxylic acid component and a diol component with the carbon number of 3 or more and 16 or less or a polyester resin (resin $\beta$) containing a diol component and a dicarboxylic acid component with the carbon number of 9 or more and 16 or less.

[XX] The laminated polyester film according to any one of [XVI] to [XIX], wherein the adhesion strength between the surface of the polyester film and a layer composed of the metal and/or metal-based compound is 2 N/15 mm or more on both sides.

[XXI] The laminated polyester film according to any one of [XVI] to [XX], wherein the volume resistivity in the penetration direction of the laminated polyester film is $1.0 \times 10^0$ $\Omega$cm or more and $1.0 \times 10^7$ $\Omega$cm or less.

[XXII] A resin current collector including the polyester film according to any one of [I] to [XV] or the laminated polyester film according to any one of [XVI] to [XXI].

[XXIII] The resin current collector for bipolar battery according to [XXII].

[XXIV] An electrode for bipolar battery including the resin current collector for bipolar battery according to [XXIII], wherein the resin current collector for bipolar battery includes as at least a surface layer on one side of the polyester film a surface layer including as a main component a polyester resin (resin $\alpha$) containing a dicarboxylic acid component and a diol component with the carbon number of 3 or more and 16 or less or a polyester resin (resin $\beta$) containing a diol component and a dicarboxylic acid component with the carbon number of 9 or more and 16 or less, and

the electrode for bipolar battery includes a negative-electrode active material layer on the surface layer side of the resin current collector for bipolar battery, and a positive-electrode active material layer on the side opposite to the surface layer.

[XXV] A power storage device including the resin current collector for bipolar battery according to [XXIII] or the electrode for bipolar battery according to [XXIV].

[XXVI] A power storage device including at least two electrodes for bipolar battery according to [XXIV],

wherein the power storage device has a configuration in which at least the resin current collector for bipolar battery, a positive-electrode active material layer, an electrolyte layer, a negative-electrode active material layer, and the resin current collector for bipolar battery are repeatedly laminated in this order,

the resin current collector for bipolar battery includes as at least a surface layer on one side of the polyester film, a surface layer including as a main component a polyester resin (resin $\alpha$) containing a dicarboxylic acid component and a diol component with the carbon number of 3 or more and 16 or less or a polyester resin (resin $\beta$) containing a diol component and a dicarboxylic acid component with the carbon number of 9 or more and 16 or less, and

the power storage device includes a negative-electrode active material layer on the surface layer side.

[XXVII] A secondary battery including the power storage device according to [XXV] or [XXVI].

[XXVIII] An electric vehicle including the secondary battery according to [XXVII].

[XXIV] An electric flying object including the secondary battery according to [XXVII].

Advantageous Effects of Invention

The present invention provides a polyester film that has excellent electrical conductivity, uniform electrical conductivity in the in-plane thickness direction of the film, and little decrease in electrical conductivity due to processing, and a resin current collector for bipolar battery that has little variation in battery characteristics.

Description of Embodiments

The present invention will be described in detail below.

A preferable aspect of the present invention is a polyester film satisfying the following (1) to (3):

(1) a volume resistivity at 23°C and 65 %RH is $1.0 \times 10^0$ $\Omega$cm or more and less than $1.0 \times 10^8$ $\Omega$cm;
(2) a film thickness is 1 $\mu$m or more and less than 500 $\mu$m; and
(3) the resin current collector has a polyester resin layer (layer P1) containing 1.0 % by mass or more and 30 % by mass or less of conductive particles, and the conductive particles are carbon material.

Another preferable aspect of the present invention is a polyester film satisfying the following (1') to (3'):

(1) a film thickness is 1 $\mu$m or more and less than 500 $\mu$m;

(2) the polyester film has a polyester resin layer (layer P1) containing 1.0 % by mass or more and 30 % by mass or less of conductive particles; and

(3') the layer P1 contains conductive particles C1' with an aspect ratio of 1 or more and less than 5 and conductive particles C2' with an aspect ratio of 5 or more.

By adopting this aspect, a polyester film can be obtained which has good volume resistivity in the thickness direction of the film, excellent electrical conductivity, and uniform electrical conductivity in the in-plane thickness direction of the film.

(Polyester Film)

The polyester film in the present invention refers to a film containing a polyester resin as a main component. The term "main component" used herein refers to a component that is contained in an amount of more than 50% by mass, taking the total components of the target substance as 100% by mass.

The polyester resin referred to in the present invention is obtained by polycondensation of a dicarboxylic acid constituent and a diol constituent. In the present specification, the term "constituent" refers to the smallest unit that can be obtained by hydrolysis of polyester. In the present application, a polyester resin obtained by polycondensation of a dicarboxylic acid constituent and a diol constituent may be referred to as a polyester resin containing a dicarboxylic acid component and a diol component.

Examples of the diol constituents constituting such polyester resins include aliphatic diols such as ethylene glycol, 1,2-propanediol, 1,3-propanediol, 1,4-butanediol, 1,2-butanediol, 1,3-butanediol, 1,5-pentanediol, 1,6-hexanediol, 1,7-heptanediol, 1,8-octanediol, 1,9-nonanediol, and 1,10-decanediol; alicyclic diols such as 1,4-cyclohexane dimethanol, 1, 3-cyclobutanedimethanol, 2,2,4,4-tetramethyl-1,3-cyclobutanedimethanol, and spiroglycol; and those in which a plurality of the above-mentioned diol components are linked together.

Examples of the dicarboxylic acid constituents constituting such polyester resins include aromatic dicarboxylic acids such as terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, and 4,4'-diphenyl ether dicarboxylic acid.

Examples of the polyester resins containing such dicarboxylic acid components and diol components include polyethylene terephthalate (PET), polybutylene terephthalate (PBT), polytrimethylene terephthalate (PTT), polycyclohexylenedimethylene terephthalate (PCT), and polyethylene naphthalate (PEN). These polyester resins may be copolymerized with isophthalic acid or naphthalenedicarboxylic acid as a part of the dicarboxylic acid component of the polyester, and with 1,3-butanediol, 1,4-cyclohexanedimethanol, or 2,2,4,4-tetramethyl-1,3-cyclobutanedimethanol as a part of the diol component, to the extent that the effects of the present application is not affected.

(Biaxially oriented polyester film)

The polyester film of the present invention is more preferably biaxially oriented from the viewpoint of improving the mechanical strength and thermal dimensional stability of the film. The "biaxial oriented" referred to here means that the biaxial orientation pattern is shown by wide-angle X-ray diffraction. A biaxially oriented polyester film can generally be obtained by stretching an unstretched thermoplastic resin film in an axial direction of the film-forming machine (hereinafter also referred to as a longitudinal direction) and in a width direction, followed by heat treatment to complete oriented crystallization.

The polyester film of the present invention preferably has a volume resistivity at 23°C and 65% RH of $1.0 \times 10^0$ $\Omega$cm or more and less than $1.0 \times 10^8$ $\Omega$cm, as determined by the volume resistivity measurement described below.

The volume resistivity is a numerical value that reflects the electrical conductivity in the thickness direction of the film, and is independent of the film thickness. By setting the volume resistivity of the polyester film of the present invention at 23°C and 65% RH to less than $1.0 \times 10^8$ $\Omega$cm, the polyester film has excellent electrical conductivity, and can increase the current value flowing through the battery and exhibit sufficient battery performance, when the polyester film is used as a resin current collector for bipolar battery. In addition, by setting the volume resistivity of the polyester film of the present invention at 23°C and 65%RH to less than $1.0 \times 10^8$ $\Omega$cm, conductive paths are sufficiently formed in the thickness direction, and significant degradation of electrical conductivity can be suppressed even when the polyester film of the present invention is deformed, for example, stretched or bent, during processing as a battery member. The volume resistivity at 23°C and 65% RH is more preferably $1.0 \times 10^7$ $\Omega$cm or less, and even more preferably $1.0 \times 10^6$ $\Omega$cm or less.

By setting volume resistivity of the polyester film of the present invention at 23°C and 65 %RH to $1.0 \times 10^0$ $\Omega$cm or more, when a cast film is made by the electrostatic application method in a casting step of film formation described below, unstretched film can be obtained without wrinkles or uneven thickness due to uneven application, the occurrence of surface defects due to wrinkles or uneven thickness of the polyester film after film formation can be suppressed in a case where a layer (hereinafter referred to as a layer M) composed of a metal and/or metal-based compound described later is provided, and a decrease in current value and an increase in variation in current value in a case where incorporated into a power storage device as a resin current collector can be suppressed.

The electrostatic application method is a technique in which a polyester resin layer is charged, adhered to a metal casting drum, and cooled to obtain an unstretched sheet. However, when the volume resistivity of the polyester film is low, the charge generated by the electrification may flow onto the casting drum, which may provide reduced adhesion to the casting drum, resulting in uneven application.

The volume resistivity of the polyester film of the present invention at 23°C and 65% RH is more preferably $1.0 \times 10^1$ $\Omega$cm or more, and even more preferably $1.5 \times 10^2$ $\Omega$cm or more, and particularly preferably $1.0 \times 10^2$ $\Omega$cm or more.

The polyester film of the present invention preferably has a film thickness of 1 $\mu$m or more and less than 500 $\mu$m, as determined by the method described below.

When the film thickness is 1 $\mu$m or more, the occurrence of breakage starting from the layer P1 described below during film formation can be suppressed, and film formability can be improved. In addition, the film becomes more resistant to stretching and significant degradation of electrical conductivity can be suppressed even when the film is deformed during processing as a battery member. The film thickness is more preferably 2 $\mu$m or more, still more preferably 3 $\mu$m or more, and most preferably 4 $\mu$m or more. When the film thickness is less than 500 $\mu$m, the increase in battery size in a case where the film is incorporated as a resin current collector for bipolar battery can be minimized. The film thickness is more preferably 300 $\mu$m or less, particularly preferably 150 $\mu$m or less, and most preferably 80 $\mu$m or less.

In a case where the thickness of the polyester film of the present invention is set to 80 $\mu$m or less, it is more preferable that the polyester film of the present invention is a uniaxially oriented or biaxially oriented polyester film, and particularly a biaxially oriented polyester film, from the viewpoint of increasing the strength of the film and suppressing a significant degradation in electrical conductivity even when the film is deformed during processing as a battery member.

(Layer P1: Polyester resin layer containing 1.0% by mass or more and 30% by mass or less of conductive particles)

The polyester film of the present invention preferably has a polyester resin layer (layer P1) containing 1.0% by mass or more and 30% by mass or less of conductive particles.

When the polyester film has the layer P1 containing 1.0% by mass or more and 30% by mass or less of conductive particles, the volume resistivity of the above-mentioned film can be controlled within a preferred range, and good electrical conductivity can be developed in the thickness direction of the polyester film.

The conductive particles preferably include one or more selected from metal particles, metal oxide particles, conductive resin particles, and carbon materials. More preferably, the conductive particles include carbon materials. Even more preferably, the conductive particles are carbon materials.

Examples of the metal particles used as the conductive particles include particles containing one selected from the group consisting of gold, silver, copper, tin, nickel, indium, aluminum and iron as a main component, as well as metal particles such as stainless steel and nickel-indium alloy.

Examples of the metal oxide particles used as the conductive particles include tin oxide, zinc oxide, and zinc oxide. In addition, particles having a coating layer composed of a metal exemplified for the above-described metal particles and a metal oxide exemplified for the above-described metal oxide on the surface of inorganic particles such as aluminum oxide, calcium carbonate, mica, talc, or glass can also be used.

Examples of the conductive resin particles used as the conductive particles include resins having a conjugated double bond structure in the main chain skeleton, such as polyacetylene, poly-p-phenylene, polyfluorene, and poly-p-phenylenevinylene; thiophene-based resins, such as polyethylenedioxythiophene (PEDOT)/polystyrenesulfonic acid (PSS), polythiophene, and polythienylenevinylene; polyaniline; and polypyrrole.

The above-mentioned carbon material is a material which exhibits peaks observed around 1580 cm$^{-1}$ derived from the graphite structure (sp$^2$ bond), generally referred to as the G band, and around 1350 cm$^{-1}$ derived from the diamond structure (sp$^3$ bond), generally referred to as the D band, in Raman spectrometry.

By setting the amount of conductive particles contained in the layer P1 to 1.0% by mass or more, the volume resistivity can be reduced and the electrical conductivity of the film can be increased. Moreover, the electrical conductivity in the thickness direction can be made uniform. The concentration of the conductive particles contained in the layer P1 is more preferably 1.5% by mass or more, and even more preferably 2.0% by mass or more.

By adjusting the amount of the conductive particles contained in the layer P1 to 30% by mass or less, it is possible to suppress the occurrence of discharge turbulence in the film formation step of the polyester film of the present invention, and also possible to suppress the occurrence of breakage originating from the conductive particles during stretching and the generation of many small air spaces (hereinafter also referred to as voids) which can cause breakage when the film is stretched. The electrical conductivity in the thickness direction can also be made uniform because the occurrence of a large number of voids can be suppressed. In the film, by setting the amount of the conductive particles contained in the layer P1 to 30% by mass or less, a significant decrease in the mechanical strength of the film can be suppressed. Accordingly, significant degradation of electrical conductivity can be suppressed even when the film is deformed during processing as a battery member. Furthermore, when the polyester film of the present invention is mounted on a power storage device as a current collector, breakage of the polyester film and degradation of battery characteristics due to thermal deformation accompanying charging and discharging of the battery and minute deformation due to external stress can be suppressed. The amount of the conductive particles contained in the layer P1 is more preferably 20% by mass or less, even more preferably 15% by mass or less, particularly preferably 10% by mass or less, and most preferably 5% by mass or less.

The carbon material preferably contains one or more selected from furnace black, acetylene black, carbon nanotubes represented by single-walled carbon nanotube, multi-walled carbon nanotubes, and thin-walled carbon nanotubes, carbon fibers, graphene, Ketjen black, fibrous carbon, fullerene, and graphite, in a total amount of 80 % by mass in 100% by mass of the carbon material. The carbon material more preferably contains one or more selected from Ketjen black, carbon nanotube, and acetylene black, in a total amount of 80 % by mass or more and 100 % by mass or less in 100 % by mass of the carbon material from the viewpoint of imparting electrical conductivity with a small amount of addition.

In the polyester film of the present invention, the layer P1 preferably contains at least two types of conductive particles that are conductive particles C1' with an aspect ratio of 1 or more and less than 5 and conductive particles C2' with an aspect ratio of 5 or more. The method of determining the aspect ratio of the conductive particles contained in the layer P1 will be described below. The aspect ratio can be determined by the same measurement method regardless of whether the conductive particles are metal particles, metal oxide particles, conductive resin particles, or carbon materials.

When the layer P1 contains at least two types of conductive particles that are conductive particles C1' with an aspect ratio of 1 or more and less than 5 and conductive particles C2' with an aspect ratio of 5 or more, the volume resistivity of the film can be set within a preferred range with a smaller amount compared to a case where either type of conductive particles is contained alone. In addition, conductive paths are sufficiently formed in the thickness direction, and significant degradation of electrical conductivity can be suppressed even when the polyester film of the present invention is deformed, for example, stretched or bent, during processing as a battery member. Furthermore, since the content of the conductive particles can be small, the mechanical strength of the film can be increased.

The following may explain why significant degradation of the electrical conductivity of the material can be suppressed even when subjected to deformation such as stretching or bending. Conductive particles with an aspect ratio of 5 or more have high electrical conductivity in the long axis direction of the conductive particles and have an ability to transmit electrons over long distances. However, when the conductive particles are subjected to deformation such as stretching or bending, the spacing between the conductive particles increases, making the connection points prone to being disconnected. Conductive particles with an aspect ratio of 1 or more and less than 5 are smaller in size and have a shape closer to a sphere compared to conductive particles with an aspect ratio of 5 or more. When at least two types of conductive particles with different aspect ratios are contained in the layer P1, the conductive particles with an aspect ratio of 1 or more and less than 5 enter between the disconnected conductive paths of conductive particles with an aspect ratio of 5 or more when subjected to deformation such as stretching or bending, thereby suppressing the disconnection of the conductive paths.

When the layer P1 contains at least two types of conductive particles that are conductive particles C1' with an aspect ratio of 1 or more and less than 5 and conductive particles C2' with an aspect ratio of 5 or more, it is possible to suppress the degradation of the electrical conductivity in a case where the polyester film of the present invention is heated. This is because even when the dispersion state of the conductive particles contained in the polyester film of the present invention due to the increased mobility of the resin molecular chains under high temperature conditions, the conductive particles with an aspect ratio of 1 or more and less than 5 can enter between the disconnected conductive paths of conductive particles with an aspect ratio of 5 or more and suppress the disconnection of the disconnected conductive paths. Therefore, in a power storage device using the polyester film of the present invention as a resin current collector for bipolar battery, a decrease in current value is suppressed even when the temperature rises during operation.

From the same viewpoint as those described above, it is preferable that in the polyester film of the present invention, the layer P1 contains at least two types of conductive particles that are conductive particles C1 with an aspect ratio of 1 or more and less than 5, and conductive particles C2 with an aspect ratio of 5 or more.

Here, carbon material C1 with an aspect ratio of 1 or more and less than 5 is preferably one or more selected from furnace black, acetylene black, Ketjen black, and fullerene. From the viewpoint of excellent electrical conductivity, carbon material C1 with an aspect ratio of 1 or more and less than 5 is more preferably acetylene black and/or Ketjen black.

Moreover, the carbon material C2 with an aspect ratio of 5 or more is preferably one or more selected from single-walled carbon nanotubes, multi-walled carbon nanotubes, carbon fibers, and graphene. Among them, one selected from single-walled carbon nanotubes, multi-walled carbon nanotubes, and carbon fibers is more preferred.

As for the polyester film of the present invention, a ratio of an area (SC1) occupied by the carbon material C1 to an area (SC2) occupied by the carbon material C2 in the layer P1 is preferably 0.5 times or more and 5 times or less, the ratio preferably being 0.5 times or more and 5.0 times or less, as determined by the following methods:

<Method of measuring area occupied by each carbon material>

A cross-sectional image (dimension in image: 18.5 μm in length × 25 μm in width) observed at a magnification of 5000 times using a scanning electron microscope (JSM-6700 manufactured by JEOL Ltd.) is analyzed as follows using an image analysis software (Image-Pro Plus Version 4.0 for "Windows" (registered trademark), created by Planetron Corporation).

(i) Image analysis conditions

After the cross-sectional image is captured using the software, 8-bit grayscale processing is performed by executing the "Gray Scale 8" command under the "Conversion" menu. Then, in the 'Spatial Calibration' command under the 'Calibration' menu, the width of the captured image is set to 25 μm. Thereafter, the binarization processing is performed using the 'Binarization' command under the 'Process' menu.

(Binarization Process Condition)

- '3 × 3' Selection
- Threshold setting: The automatic detection button to the right of the numerical entry field is pressed once, and the resulting value is used.
- Preview conditions: background is shown in white, and detected particles are shown in black.

After the binarization process is applied, the 'Count/Size' command screen under the 'Measurement' menu is opened to set the following particle detection and particle analysis conditions, and 'Count' is executed to analyze the detected particles.

(Particle Detection Condition)

- Luminance range selection: 'Auto-extract Dark Object' is selected.
- 'Measure Object' is checked for selection.

(Optional Conditions for Object Extraction)

- 4-Connect/8- Connect: 4- Connect is selected
- Only 'Preselect' and 'Fill holes' are checked for selection
- Smoothing: 0
- Exclusion of boundaries: 'All boundaries' is selected.

(Particle Analysis Conditions)

The aspect ratio and area of each carbon material is obtained in the image obtained using the aspect ratio (Aspect value) and area (Area value) in the 'Count/Size' command screen from the obtained image.

For five different visual fields, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the carbon material (carbon material C1) existing in the region where the aspect ratio is 1 or more and less than 5. When a plurality of local maximum values exist in the region where the aspect ratio is 1 or more and less than 5, the weighted average value using the vertical axis values shall be the aspect ratio of the carbon material (carbon material C1) existing in the region where the aspect ratio is 1 or more and less than 5.

Similarly, when a local maximum value exists in the region where the aspect ratio is 5 or more, the local maximum value shall be the aspect ratio of the carbon material (carbon material C2) existing in the region where the aspect ratio is 5 or more. When a plurality of local maximum values exist in the region where the aspect ratio is 5 or more, the weighted average value using the vertical axis values shall be the aspect ratio of the carbon material (carbon material C2) existing in the region where the aspect ratio is 5 or more.

For each of the five different fields of view, the aspect ratios of the carbon material (carbon material C1) existing in the region where the aspect ratio is 1 or more and less than 5 and the carbon material (carbon material C2) existing in the region where the aspect ratio is 5 or more are determined, and average values of the five fields of view in the regions shall be the aspect ratios of the carbon material C1 and the carbon material C2, respectively, in the polyester film.

The sum (SC1) of the area of the carbon material (carbon material C1) existing in the region where the aspect ratio is 1 or more and less than 5 as confirmed by the number histogram described above is determined. Subsequently, the sum (SC2) of the area of the carbon material (carbon material C2) existing in the region where the aspect ratio is 5 or more is determined, and the ratio of the area (SC2) occupied by the carbon material C2 to the area (SC1) occupied by the carbon material C1 in the layer P1 is obtained. The area ratio can be determined by the same measurement method regardless of whether the conductive particles are metal particles, metal oxide particles, conductive resin particles, or carbon materials.

By setting the ratio of the area (SC2) occupied by the carbon material C2 to the area (SC1) occupied by the carbon material C1 in the layer P1 to 0.5 times or more, carbon material C1 with an aspect ratio of 1 or more and less than 5 enters between carbon materials C2 with an aspect ratio of 5 or more, thereby better achieving an effect of suppressing the disconnection of the conductive path when the carbon material is subjected to deformation such as stretching or bending. In particular, it is possible to suppress the degradation of electrical properties after processing that applies tension such as metal deposition, is applied to polyester film. Furthermore, by making the area occupied by the carbon material C1 in the layer P1 5 times or less the area occupied by the carbon material C2, electrical conductivity can be obtained without increasing the content of the carbon material, resulting in a film with excellent mechanical strength that is less likely to stretch even when tension is applied, and the effect of suppressing the disconnection of the conductive path when the film is subjected to deformation such as stretching or bending. The ratio of the area (SC2) occupied by the carbon material C2 to the area (SC1) occupied by the carbon material C1 in the layer P1 is more preferably 1.0 times or more. The ratio of the area (SC2) occupied by the carbon material C2 to the area (SC1) occupied by the carbon material C1 in the layer P1 is more preferably 4.5 times or less, and still more preferably 4.0 times or less.

From the same viewpoint as those described above, it is preferable that in the polyester film of the present invention, the layer P1 contains at least two types of conductive particles that are conductive particles C1' with an aspect ratio of 1 or more and less than 5, and conductive particles C2' with an aspect ratio of 5 or more, and that the area occupied by the conductive particles C1' in the layer P1, measured by the same method as above, is 0.5 to 5 times the area occupied by the conductive particles C2'.

In the polyester film of the present invention, it is preferable that the conductive particles contained are carbon materials, and in the layer P1, volume-based average dispersed particle size of the carbon materials contained determined by the method described later is 0.15 $\mu$m or more and 0.90 $\mu$m or less, and the number of the dispersed particles is 1.5 particles/$\mu$m$^2$ or more and 5.0 particles/$\mu$m$^2$ or less. The volume-based average dispersed particle size of 0.15 $\mu$m or more means that the carbon material contained in the layer P1 is adequately aggregated, and that it develops its role as a relay point for the conduction of electrons in the thickness direction of the film. An expected reason is as follows. When the carbon material is excessively dispersed and exists alone, the molecular structure of the carbon material restricts the movement of electrons to linear or planar direction, and thus electronic conductivity in the thickness direction may not be improved. On the other hand, when a plurality of carbon materials are aggregated without adequate regularity, the three-dimensional spreading of the carbon materials expands the range of electron movement, allowing electrons to be efficiently transferred between the carbon material aggregates present in the polyester film, thus improving electron conductivity in the thickness direction. The volume-based average dispersed particle size of the carbon material contained in the layer P1 is more preferably 0.20 $\mu$m or more.

In addition, by setting the volume-based average dispersed particle size to 0.90 $\mu$m or less, film breakage originating from the carbon material when the film is stretched or the tensile force is applied can be suppressed. The volume-based average dispersed particle size of the carbon material tends to increase depending on the carbon content concentration, and when the carbon material is contained in an amount exceeding 30% by mass, it becomes very difficult to make the volume-based average dispersed particle size 0.90 $\mu$m or less. The more preferable range of the volume-based average dispersed particle size is 0.80 $\mu$m or less.

In the polyester film of the present invention, it is preferred that the conductive particles contained are carbon materials, and that the number of dispersed carbon materials contained in the layer P1, as determined by a method described below, is 1.5 particles/$\mu$m$^2$ or more and 5.0 particles/$\mu$m$^2$ or less. The fact that the number of dispersed carbon particles contained in the layer P1 is 1.5 particles/$\mu$m$^2$ or more and 5.0 particles/$\mu$m$^2$ or less indicates that the carbon particles are present adequately in the film, which are well aggregated to the extent to that they serve as relay points for the electron conduction.

The fact that the volume-based average dispersed particle size of the carbon material contained is 0.15 μm or more and 0.90 μm or less, and the number of the dispersed particles is 1.5 particles/μm$^2$ or more and 5.0 particles/μm$^2$ or less, means that a sufficient amount of the carbon material that serves as a relay point for electrical conductivity is present in the film, and by adopting such an aspect, the volume resistivity of the polyester film can be more easily controlled within a preferred range.

When the polyester film of the present invention is used as a resin current collector for bipolar battery, from the viewpoint of suppressing the decomposition of the polyester resin due to electrochemical reactions in the battery, among the polyester films, the surface layer closest to the negative electrode is preferably configured to contain as the main components a polyester resin (resin α) containing a dicarboxylic acid component and a diol component with a carbon number of 3 or more and 16 or less. The polyester resin containing the dicarboxylic acid component and the diol component with a carbon number of 3 or more and 16 or less is obtained by polycondensation of the dicarboxylic acid constituent and the diol constituent with a carbon number of 3 or more and 16 or less.

By using a diol component with a carbon number of 3 or more and 16 or less, it is possible to reduce molecular mobility around the ester bond, which can be a decomposition point of the polyester resin. As a result, it is possible to prevent molecules that decompose ester bonds, originating from the electrolytic solution, electrolyte, and additives present in the vicinity, from approaching the ester bonds of the polyester resin. Examples of the molecules that decompose ester bonds include water molecules, hydrogen ions, alcohols, and carboxylic acids.

In particular, when a cyclic diol component with a carbon number of 3 or more and 16 or less is used, the three-dimensional structure of the diol component becomes large, which can better prevent molecules that decompose the ester bonds from approaching the ester bonds of the polyester resin. When an aliphatic diol component with a carbon number of 3 or more and 16 or less is used, the aliphatic diol components self-assemble to densely stack the polyester resin molecular chains, and it is possible to suppress the intrusion of molecules or the like that break down the aforementioned ester bonds between the molecules of the polyester resin molecular chains.

By setting the carbon number of the diol component to 16 or less, the polymerization reaction can proceed without aggregation of the diol components in the polyester polymerization step, and a polyester resin having a molecular weight suitable for a film can be produced. The carbon number of the diol component is more preferably 12 or less, and still more preferably 9 or less. Particularly preferable examples of the polyester resin include polybutylene terephthalate (PBT), polytrimethylene terephthalate (PTT), and polycyclohexylenedimethylene terephthalate (PCT).

Furthermore, when the layer P1 contains 1.0% by mass or more and 30% by mass or less of a carbon material, the layer P1 contains the resin α as a main component, and the diol components with a carbon number of 3 or more and 16 or less are aliphatic diols with a carbon number of 3 or more, the aliphatic component with a carbon number of 3 or more has a high affinity for the graphite structure and/or diamond structure portion of the carbon material contained in the layer P1, and therefore the carbon material with high affinity can be dispersed more uniformly.

When the polyester film of the present invention is used as a resin current collector for bipolar battery, from the viewpoint of suppressing the decomposition of the polyester resin due to electrochemical reactions in the battery, in the polyester films, the surface layer closest to the negative electrode is preferably configured to contain as the main components a polyester resin (resin β) containing a diol component and a dicarboxylic acid component with a carbon number of 9 or more and 16 or less. The polyester resin containing the diol component and the dicarboxylic acid component with a carbon number of 9 or more and 16 or less is obtained by polycondensation of the diol constituent and the dicarboxylic acid constituent with a carbon number of 9 or more and 16 or less. It is more preferable that the surface layer of the polyester film closest to the negative electrode corresponds to the layer P1.

By using a dicarboxylic acid component with a carbon number of 9 or more and 16 or less, it is possible to reduce molecular mobility around the ester bond, which can be a decomposition point of the polyester resin. As a result, it is possible to prevent molecules that decompose ester bonds, originating from the electrolytic solution, electrolyte, and additives present in the vicinity, from approaching the ester bonds of the polyester resin.

In particular, when an aromatic dicarboxylic acid component with a carbon number of 9 or more and 16 or less or an aliphatic dicarboxylic acid component with a carbon number of 9 or more and 16 or less is used, the dicarboxylic acid components self-assemble to densely stack the polyester resin molecular chains, thereby making it possible to prevent molecules or the like that decompose the ester bonds from penetrating between the molecules of the polyester resin molecular chains.

By setting the carbon number of the dicarboxylic acid component to 16 or less, the polymerization reaction can proceed without aggregation of the dicarboxylic acid components in the polyester polymerization step, and a polyester resin having a molecular weight suitable for a film can be produced. The carbon number of the dicarboxylic acid component is more preferably 14 or less. Particularly preferable examples of the polyester resin include polyethylene naphthalate (PEN).

That is, when the polyester film of the present invention is used as a resin current collector for bipolar battery, from the viewpoint of suppressing decomposition of the polyester resin due to an electrochemical reaction in the battery, it is preferable that the layer P1 is at least one outermost layer of the polyester film, and that the layer P1 is composed of a layer containing a resin α or resin β as a main component.

It is preferable that the layer P1 in the polyester film of the present invention contains at least two polyester resins having different melting points, from the viewpoint of reducing variation in volume resistivity in the in-plane direction of the polyester film. Here, containing two or more polyester resins having different melting points means that two or more heat of melting peaks at different temperatures are observed at the same time in the differential scanning calorimetry described below. This is because heat treatment is used to melt only the polyester resin with low melting point, which fills the voids (air space) originating from the conductive particles contained in the layer P1, thereby preventing the volume resistivity of the polyester film from partially increasing. By adopting as a heat treatment method, a method in which heat treatment is performed in the heat treatment step during film formation described below and only the polyester resin with low melting point is melted, voids can be filled efficiently, and in particular voids caused by stretching can be filled efficiently. Alternatively, the heat treatment can be performed by appropriately heating the film after film formation.

From the same viewpoint as those described above, the layer P1 in the polyester film of the present invention more preferably contains at least two polyester resins having different melting points.

When two polyester resins having different melting points are contained, it is preferable that the difference between the two melting points be 10°C or more to facilitate development of the aforementioned void-filling effect. The difference between the two melting points is more preferably 15°C or more, and still more preferably 20°C or more.

When the layer P1 in the polyester film of the present invention contains three or more polyester resins having different melting points, in the three or more polyester resins having different melting point, it is preferable that the difference between the highest melting point of the polyester resin and the second highest melting point of the polyester resin be 10°C or more to facilitate development of the aforementioned void-filling effect.

When the layer P1 of the present invention contains polyethylene terephthalate having a melting point of 255°C, it is preferable that a polyester resin having a melting point of 235°C or less be also included in the layer P1 as a polyester resin having a lower melting point.

In particular, the more preferred aspect is that the diol component constituting the polyester resin having a lower melting point included in the layer P1 is the aforementioned aliphatic diols with a carbon number of 3 or more and 16 or less. This is because the use of aliphatic diols with a carbon number of 3 or more as a component of polyester resin improves the affinity for the graphite structure and/or diamond structure portions of the carbon material contained in the layer P1. This improvement in affinity for the carbon material allows the polyester resin having a lower melting point to be dispersed uniformly in the polyester film and the carbon material with high affinity also to be dispersed uniformly, which, together with the aforementioned void-filling effect, further reduces the in-plane variation in volume resistivity of the film.

The layer P1 of the polyester film of the present invention preferably contains 0.01% by mass or more and 10% by mass or less of the compound having an ether bond in its main chain.

The compound having an ether bond in its main chain has a structure in which hydrocarbon main chains are linked by neutral, non-polar ether bonds, and has excellent affinity for the surface of carbon material which has low polarity, and can adhere to the surface of carbon material due to the flexibility derived from the ether bonds. Accordingly, carbon materials can be prevented from excessively aggregating with each other and dispersed within the film, so that the volume resistivity of the polyester film can be reduced even when the content of the carbon material is low.

Examples of the compound having an ether bond in its main chain include polyether compounds having linear hydrocarbons and modified products thereof such as polyethylene glycol, polytrimethylene glycol, and polytetramethylene glycol, and aromatic ether compounds and modified products thereof such as polyphenylene ether (PPE), polyether ether ketone (PEEK), and polyether imide (PEI). Among them, polyether compounds having linear hydrocarbons such as polyethylene glycol, polytrimethylene glycol, and polytetramethylene glycol are preferred, from the viewpoint of increasing affinity for the graphite structure ($sp^2$ bond) and diamond structure ($sp^3$ bond) of the carbon material, and from the viewpoint of increasing molecular flexibility. Copolymers of polyester resins and polyether compounds having linear hydrocarbons may also be used.

The method of incorporating the compound having an ether bond in its main chain into the polyester film includes a method in which the polyester resin and the carbon material or master pellets containing the carbon material are mixed together and then melt-extruded to form a sheet. A more preferred method is a method in which, when mixing a carbon material with a polyester resin to prepare a master pellet, the compound having an ether bond in its main chain is mixed in to prepare master pellets containing the compound having an ether bond in its main chain and the carbon material, and then the master pellets are mixed with a polyester resin and melt-extruded to form a sheet, which is preferable from the viewpoint of suppressing aggregation of the carbon material.

The content of the compound having an ether bond in its main chain contained in the layer P1 is preferably 0.01% by mass or more and 10% by mass or less. By setting the content of the compound having an ether bond in its main chain to 0.01% by mass or more, the effect of suppressing the aggregation of the carbon material can be better obtained. The more preferable content of the compound having an ether bond in its main chain contained in the layer P1 is 0.03% by mass or more, even more preferably 0.05% by mass or more, and particularly preferably 0.10% by mass or more.

In addition, by setting the content of the compound having an ether bond in its main chain to 10% by mass or less, when the polyester film is biaxially stretched, it is possible to prevent the molecular orientation due to stretching from being excessively suppressed, resulting in a degraded mechanical strength and the occurrence of film breakage during the step. Accordingly, all of the volume resistivity, elongation at break, and breaking strength of the polyester film can be within desirable ranges.

As for the elongation at break of the polyester film, the elongation at break in at least one of the in-plane longitudinal and width directions of the film is preferably 25% or more and 120% or less. By setting the elongation at break to 25% or more, it is possible to suppress degradation of the performance of the power storage device which is caused by expansion and deformation of the power storage device due to heat generated by driving the power storage device and breakage of the polyester film incorporated therein when the polyester film of the present invention is incorporated as a current collector into the power storage device. In addition, the film becomes more resistant to stretching and bending, and even when the film is deformed during processing as a battery member, it is possible to suppress significant degradation of electrical conductivity due to breakage of the conductive path of the conductive particles caused by breakage of the polyester film. Furthermore, by setting the elongation at break to 120% or less, the crystalline of the polyester film of the present invention becomes low, which prevents the polyester film from crystallizing over time due to heat generated upon charging and discharging of the power storage device when the film is incorporated into the power storage device, resulting in breakage with a slight impact and a degradation of battery characteristics.

The elongation at break is more preferably 30% or more, even more preferably 40% or more, and most preferably 90% or more. In addition, the elongation at break is more preferably 110% or less, even more preferably 100% or less.

As for the elongation at break of the polyester film of the present invention, taking a direction in which the polyester film is rolled out as a longitudinal direction and a direction in which the polyester film is rotated 90° in the plane relative to the longitudinal direction as a width direction, the elongation at break in at least one of the longitudinal direction and the width direction preferably satisfies the above preferable range. It is further preferable that the elongation at break in both the longitudinal direction and the width direction satisfy the aforementioned preferred range.

As for the breaking strength of the polyester film, the breaking strength in at least one of the in-plane longitudinal and width directions of the film is preferably 60 MPa or more and 300MPa or less. By setting the breaking strength to 60 MPa or more, in a case where the polyester film of the present invention is incorporated into a power storage device as a current collector, it is possible to prevent the polyester film from breaking when a slight shock is applied during transportation of the power storage device, thereby degrading its performance as a power storage device. The breaking strength is more preferably 70 MPa or more, still more preferably 75 MPa or more, and most preferably 100 MPa or more. In a step such as a roll-to-roll metal deposition step in which the polyester film of the present invention is heated at high temperature while embracing the roll during conveyance, a small amount of thermal deformation occurs under tension during film conveyance, inhibiting the formation of conductive paths by carbon materials in the film and increasing volume resistivity, which can be prevented by setting the breaking strength to 60 MPa or more. Furthermore, when the polyester film of the present invention is incorporated into a battery element, the polyester film is prevented from being deformed and broken, thereby preventing the battery characteristics from significantly deforming or breaking and the ignition of the battery element due to a short circuit from occurring, even in a case of dropping or collision where a large amount of impact is applied to the battery element, for example.

By setting the breaking strength to 300 MPa or less, in a case where the polyester film of the present invention is incorporated into a power storage device as a current collector, it is possible to prevent the polyester film from breaking during charging and discharging, thereby degrading its performance as a power storage device. The reason may be thought to be as follows. Moderate crystallization of polyester film increases breaking strength, but decreases resistance to film deformation. Therefore, the volume change of the battery member during repeated charging and discharging of the battery element accumulates in the polyester film as deformation damage and induces breakage of the polyester film.

As for the breaking strength of the polyester film of the present invention, taking a direction in which the polyester film is rolled out as a longitudinal direction and a direction in which the polyester film is rotated 90° in the plane relative to the longitudinal direction as a width direction, the breaking strength in at least one of the longitudinal direction and the width direction preferably satisfy the above preferable range. It is further preferable that the breaking strength for both the longitudinal direction and the width direction satisfy the aforementioned preferred range.

The affinity of the carbon material contained in the polyester film of the present invention with the polyester resin and the compound having an ether bond in its main chain can be evaluated by using the Hansen solubility parameter values described below. The Hansen solubility parameter value is a numerical value that indicates the ease of mixing of two different materials. By reducing the difference (hereinafter, sometimes referred to as ΔHSP value (MPa1/2)) between the Hansen solubility parameter values of the carbon material, the polyester resin, and the compound having an ether bond in its main chain, it is possible to suppress the aggregation of the carbon material in the resin and control the volume resistivity of the polyester film within a preferred range. It is preferable that the ΔHSP value between the polyester resin and the carbon material contained in the polyester film is 6 MPa$^{1/2}$ or less, and the ΔHSP value between the compound having an ether bond in its main chain and the carbon material is 6 MPa$^{1/2}$ or less. The Hansen solubility parameter value of carbon material is determined from the entire carbon material contained without dividing it by aspect ratio.

When each ΔHSP value is 6 MPa$^{1/2}$ or less, it is possible to suppress the aggregation of the carbon material and improve the dispersion in the film. A more preferable range for each ΔHSP value is 5 MPa$^{1/2}$ or less, and particularly preferably 4.5 MPa$^{1/2}$ or less.

The ΔHSP value between the polyester resin and the compound having an ether bond in its main chain contained in the layer P1 is preferably 8 MPa$^{1/2}$ or less. When the ΔHSP value between the polyester resin and the compound having an ether bond in its main chain is 8 MPa$^{1/2}$ or less, aggregation of the carbon material due to aggregation of the compound having an ether bond in its main chain in the polyester resin can be suppressed.

When the compound having an ether bond in the main chain is a copolymer of multiple compounds, the ΔHSP value of each copolymer component is multiplied by the content ratio (percentage) of each copolymer component in the compound and the sum of the products is defined as the ΔHSP value of the copolymer of the multiple compounds.

(Layer P2: Polyester resin layer with carbon material content lower than that in layer P1)

In the polyester film of the present invention, it is preferable that the conductive particles contained in the layer P1 are carbon materials, a polyester resin layer (layer P2) with a carbon material content lower than that of the layer P1 is provided on at least one side of the layer P1 as the outermost layer of the polyester film, and the following relation is satisfied:

$$M_{P1} - M_{P2} \geq 0.1$$

where $M_{P1}$ (% by mass) is a content of the carbon material in the layer P1, and $M_{P2}$ (% by mass) is a content of the carbon material in the layer P2.

This is because, in the casting step using the electrostatic application method for film formation, coextrusion is performed such that the casting drum and the layer P2 are in contact with each other to form an unstretched film, and therefore, even when the volume resistivity of the layer P1 is low, the layer P2 with high volume resistivity catches the electrified charge flowing out of the casting drum and prevents the occurrence of uneven application. Alternatively, in steps such as a roll-to-roll metal vapor deposition step in which the film is heated at high temperatures while embracing the roll during conveyance, the film can be prevented from thermally deteriorating by strengthening its adhesion to the cooling roll through electrification.

When the polyester film of the present invention is used as a resin current collector for bipolar battery, with the layer P2 disposed on the negative electrode side, it is preferable for the layer P2 to contain resin α or resin β as a main component, for the same reasons as described above section for the layer P1, from the viewpoint of suppressing decomposition of the polyester resin due to an electrochemical reaction in the battery.

The lamination configuration of the polyester film of the present invention may be a two-layer structure of layer P2/layer P1, or a three-layer structure of layer P2/layer P1/layer P2 or layer P1/layer P2/layer P1, but a two-layer structure of layer P2/layer P1 or a three-layer structure of layer P2/layer P1/layer P2 is preferred.

The content $M_{P2}$ (% by mass) of the carbon material in the layer P2 is preferably 0.1% by mass or more. This is because when the layers P2 and P1 are laminated such that the layer P1 is sandwiched between the two layers P2, it is possible to suppress degradation of the electrical properties of the layer P1.

The proportion of the layer P1 in the entire polyester film is preferably 55% or more. The proportion of the layer P1 to the entire polyester film herein means a percentage obtained by dividing the thickness of the layer P1 by the thickness of the polyester film. When a plurality of layers P1 are present in the polyester film, the total thickness of the plurality of layers P1 is regarded as the thickness of the layer P1. When the proportion of the layer P1 to the entire polyester film is 55% or more, the polyester film as a whole develops more electrical conductivity, and when the film is used as a resin current collector for bipolar battery, the characteristics of the bipolar battery can be improved. The proportion of the layer P1 to the entire polyester film is more preferably 65% or more.

(Method of producing biaxially oriented polyester film)

Next, the method of producing the polyester film of the present invention as a biaxially oriented film will be described with examples, but the present invention should not be construed as limited only to the product obtained by such examples.

As a method to obtain the polyester film used in the present invention, the conventional polymerization method can be adopted. For example, the above-mentioned dicarboxylic acid component or its ester-forming derivative and the above-mentioned diol component or its ester-forming derivative are subjected to a transesterification reaction or an esterification reaction by a known method, followed by a melt polymerization reaction to obtain the polyester film. If necessary, the polyester obtained by the melt polymerization reaction may be subjected to a solid phase polymerization reaction at a temperature equal to or less than the melting point of the polyester.

The polyester film of the present invention can be obtained by a conventionally known production method. Specifically, a method (melt casting method) can be used in which the polyester film of the present invention can be processed into a sheet by heating and melting raw materials, which are dried as necessary, in an extruder, and extruding the raw materials from a die onto a cooled casting drum. Another method (solution casting method) can also be used in which raw materials are dissolved in a solvent, the solution is extruded through a die onto a substrate such as a casting drum or endless belt to form a film, and then the solvent is dried and removed from the film layer to form a sheet.

When a polyester film having two or more layers is produced by the melt casting method, a method (coextrusion method) is preferably used in which an extruder is used for each layer constituting the biaxially oriented polyester film, the raw materials for each layer are melted, and they are laminated in a molten state in a converging device provided between an extruder and a die, and then guided to a die, extruded from the die to adhere to a casting drum cooled to a surface temperature of 20°C or more and 60°C or less, and processed into a sheet to form an unstretched film. In particular, setting the casting drum temperature to 40°C or more delays the cooling of the resin and facilitates temporary adhesion to the casting drum, which may further improve the adhesion between the unstretched film and the casting drum by the electrostatic application method described below.

As a method of dispersing the carbon material contained in the polyester film of the present invention, it is preferable to contain a polyester resin having an ether compound in its main chain and a diol component composed of aliphatics with a carbon number of 3 or more, which has a high affinity for the carbon material when producing the master pellet containing the carbon material.

When two or more kinds of carbon materials having different aspect ratios are to be contained, it is preferable to prepare master pellets each containing each kind of carbon material alone and mix and use them when forming the polyester film. This is because when the carbon material and polyester resin are kneaded to prepare the master pellet, the kneading temperature at which the carbon material is dispersed and the shear stress during kneading are different. When a master pellet is prepared by simultaneously kneading a plurality of types of carbon materials, at least one of the carbon materials may aggregate during kneading.

As a method of preparing master pellets for dispersing the carbon material, kneading is preferably performed using a twin-screw kneader.

The method of adhering the unstretched film to the casting drum can be suitably selected from the following methods: an electrostatic application method in which the extruded polyester resin is charged using a charging treatment device that applies high voltage, and then adhered to the casting drum; a method in which the polyester resin is sandwiched between a casting drum and a nip roll to adhere to the film; a method in which air pressure is applied to hold down the resin and adhere it to the casting drum; and other method. From the viewpoint of uniform adhesion in the width direction, it is preferable to use the electrostatic application method.

(Sequential biaxial stretching)

Regarding the stretching conditions for biaxial stretching of an unstretched film, when the polyester film containing a polyester resin as a main component is stretched in the longitudinal direction, it is preferable that the unoriented film is stretched in the longitudinal direction with a group of rolls heated to 70°C or more, and cooled with a group of rolls set at a temperature of 20°C or more and 50°C or less. There are no particular restrictions on the lower limit of the heating roll temperature in stretching in the longitudinal direction as long as it does not impair the stretchability of the sheet, but it is preferable that the temperature exceed the glass transition temperature of the polyester resin used. The preferred range of the stretching ratio in the longitudinal direction is 1.4 times or more and 5 times or less. The more preferred range is twice or more and 4 times or less. When the stretching ratio in the longitudinal direction is 1.4 times or more, oriented crystallization progresses and film strength can be improved. On the other hand, by setting the stretching ratio to 5 times or less, it is possible to suppress excessively orientated crystallization of the polyester resin during stretching, which leads to brittleness and film breakage during film formation.

The step film (uniaxially oriented film) stretched in the longitudinal direction is then stretched in a direction perpendicular to the longitudinal direction (width direction). It is preferable to guide the uniaxially oriented film to a tenter while holding both ends with clips, and stretch it by 1.4 times or more and 5 times or less in a direction perpendicular to the longitudinal direction (width direction) in an atmosphere heated to a temperature of 70°C or more and 160°C or less.

Thereafter, the stretched film is preferably heat-treated to stabilize the internal oriented structure. The heat history temperature of the film during heat treatment can be confirmed by a temperature of a minute endothermic peak (sometimes referred to as Tmeta) which appears just below the melting point temperature measured by a differential scanning calorimeter (DSC) described later. When polyester (melting point, 255°C) is a main component, the tenter apparatus setting temperature is preferably set such that the maximum temperature inside the tenter is 210°C or more and 245°C or less. When another thermoplastic resin is the main component, it is preferable to set to the temperature equal to or more than the melting point (°C) of the resin that is the main component minus 45°C, and equal to or less than the melting point (°C) of the resin that is the main component minus 10°C. The dimensional stability of the biaxially oriented polyester film can be improved by setting the heat treatment temperature to 210°C or more. Furthermore, by setting the heat treatment temperature to 245°C or less, the occurrence of film breakage due to melting of the polyester film can be suppressed, and production can be performed with good productivity. A more preferable range of the heat treatment temperature is 220°C or more and 235°C or less.

The temperature range of Tmeta, which represents the heat history temperature experienced by the polyester film during heat treatment, is preferably 200°C or more and 235°C or less when the polyester resin is the main component, for the reasons described above. A more preferable temperature range of Tmeta is more preferably 210°C or more and 225°C or less.

After additional heat treatment, relaxation treatment (relax treatment) may be performed in the range of 1% or more and 6% or less for the purpose of imparting dimensional stability. By setting the relaxation treatment to 1% or more, the dimensional stability of the biaxially oriented polyester film can be improved when used in a high temperature environment, and by setting it to 6% or less, an appropriate tension can be continuously applied to the biaxially oriented polyester film, preventing the thickness unevenness from worsening.

The stretching ratio in each of the longitudinal direction and the width direction is preferably set to 1.4 times or more and 5 times or less, but the area ratio (stretching ratio in longitudinal direction × stretching ratio in width direction) is preferably 2 times or more and 25 times or less, and more preferably 9 times or more and 20 times or less. By setting the area ratio to 2 or more, the molecular orientation of the resulting biaxially oriented polyester film can be promoted, improving its durability, and by uniformly dispersing the contained carbon in the in-plane direction, the variation in volume resistivity can be reduced. Thus, variation in battery characteristics can be reduced. In addition, by setting the area ratio to 25 times or less, the occurrence of breakage during stretching can be suppressed. The lower limit of the area ratio is more preferably 4 or more times, and even more preferably 5 times more.

(Layer M: Layer composed of metal and/or metal-based compound)

It is preferable for the laminated polyester film of the present invention to have at least a layer composed of a metal and/or a metal-based compound, the polyester film, and a layer composed of a metal and/or a metal-based compound, in this order, and it is more preferable that a layer composed of a metal and/or a metal-based compound (layer M) is provided on both sides of the polyester film.

The method of providing the layer M in the present invention is not particularly limited, but may include a method (hereinafter, also collectively referred to as vapor deposition method) of providing a layer by vapor deposition, sputtering, or electroplating under vacuum conditions or reduced pressure conditions filled with an inert gas such as argon gas, a method of bonding a metal foil or a foil of a metal compound to a polyester film directly or via an adhesive layer, and a method (electrolytic plating, electroless plating) of providing a metal layer by electrochemical reaction using a solution containing a metal salt. Among them, from the viewpoint of continuously forming the layer M on a film using a polyester film roll, it is preferable to use the vapor deposition method.

In a preferable aspect, when using the vacuum deposition method, a polyester roll is placed in a vacuum chamber in advance, and the unwound film is brought into close contact with a cooling roll while the metal and/or metal compound that has been heated and vaporized is solidified and adhered to the surface of the polyester film to provide a layer M, and then the film is wound up again into a film roll.

Here, inside the vacuum chamber, vacuum conditions of $9.0 \times 10^{-3}$ Pa or less, or conditions where the chamber is filled with an inert gas such as argon gas and the pressure is reduced to $9.0 \times 10^{-3}$ Pa or more and $1 \times 10^{-1}$ Pa or less is suitably used. The layer M may be formed by continuously performing two or more stages of vapor deposition step, for example by providing a first layer M by sputtering and then providing a second layer M by vacuum deposition.

Examples of the vacuum deposition methods include induction heating deposition method, resistance heating deposition method, laser beam deposition method, and electron beam deposition method. Among them, electron beam deposition method, laser beam deposition method, and induction heating deposition method, in which a large amount of heat is generated by the deposition source, are preferably used. The amount of heat generated by the deposition source needs to be increased until a layer M of the desired thickness is formed, and the substrate surface temperature needs to be sufficiently high. However, because of difficulty in actual measurement, whether a sufficient amount of heat is generated is determined by confirming that the layer M after the vapor deposition has a sufficient thickness.

However, when the amount of heat generated by the deposition source is increased to the required heat level, the temperature of the resin film rises under the control of the cooling function of a normal vacuum deposition method, and heat damage degrades the mechanical properties of the resin film, and may also melt the resin film. Therefore, it is preferable to perform vapor deposition while controlling the cooling function such that the temperature can be prevented from rising too high and the film can be cooled uniformly during the vapor deposition. Specifically, it is preferable to uniformly cool the film from the rear side of the deposition surface using a cooling mechanism composed of a metal plate or metal roll sufficiently cooled by a refrigerant. To achieve uniform cooling, it is essential that the resin film and the cooling mechanism adhere to each other without creating gaps between them. The improved adhesion reduces heat damage to the surface of the resin film, and suppresses degradation of the mechanical properties of the resin film.

For example, when the metal roll of the cooling mechanism has a flaw, the flawed area will result in a gap, and the resin film cannot be cooled due to the flawed area, increasing heat damage to the resin film. Furthermore, when foreign matter gets into the resin film and the metal rolls of the cooling mechanism, the resin film cannot be cooled due to the foreign matter, and thermal damage increases. When the amount of heat generated by the deposition source is increased to the required heat level, flaws on the metal roll and foreign matter inclusion, which are tolerated in the normal vacuum deposition methods, become a problem. Therefore, the flaws on the metal roll and foreign matter inclusion must be controlled even more strictly.

When the layer M in the present invention is to have a desired metal layer thickness, a method of forming it by a single vapor deposition (a sequence of unwinding, vapor deposition, and winding is defined as a single vapor deposition) is preferred from the viewpoints of productivity, resistance characteristics, and grade/quality. For example, thin film deposition may be repeated 20 times (the above sequence is repeated 20 times) to form an aluminum metal layer having a total thickness of 1 $\mu$m, with each vapor deposition forming an aluminum deposition layer having a thickness of 50 nm.

Examples of the metal elements constituting the layer M include gold, silver, copper, zinc, lead, nickel, iron, aluminum, titanium, cobalt, manganese, cadmium, and palladium. The layer M may be a metal layer composed of a simple metal element, or a layer composed of a metal compound in which the metal element is mixed with oxygen, nitrogen, fluorine, carbon, boron, chlorine, sulfur, or phosphorus. The metal elements in the layers M provided on the polyester film may be the same or different on both sides.

When used as a resin current collector for bipolar battery, it is preferable that the layers M present on both sides of the laminated film be a layer M using copper element on one side and a layer M using aluminum element on the opposite side.

In the laminated polyester film of the present invention, the lamination configuration of the layer composed of the polyester films (layers P1 and P2) and a metal and/or metal-based compound preferably includes at least a layer composed of a metal and/or metal-based compound, the polyester film described above, and a layer composed of a metal and/or metal-based compound in this order. Specifically, the following configurations can be exemplified. When the polyester film is a single layer, it is preferable to have a configuration of layer M/layer P1/layer M or a configuration including a layer (layer M') composed of a metal and/or metal-based compound different from that in the layer M: layer M/layer P1/layer M'.

When the polyester film has two or more layers, it is preferably layer M/layer P1/layer P2/layer M, layer M/layer P1/layer P2/layer M', or layer M/layer P2/layer P1/layer P2/layer M, or layer M/layer P2/layer P1/layer P2/layer M'. When used as a resin current collector for bipolar battery, from the viewpoint of reducing the contact resistance at the active at the interface between the active material layer and the resin current collector and suppressing degradation of battery characteristics, it is more preferable that the laminated polyester film of the present invention has the layer P1 as the outermost layer on both sides of the polyester film, and has a layer composed of a metal and/or metal-based compound on the surfaces on both sides of the layer P1.

The polyester film (layer P1 or P2) of the present invention may be provided with an anchor layer or undercoat layer that does not contain a polyester resin as a main component for the purpose of improving adhesion to the layer M, to the extent that the effect of the invention is not lost. The thickness of the anchor layer or undercoat layer (layer U), which does not contain the polyester resin as a main component, is preferably 0.01 $\mu$m or more and 1.0 $\mu$m or less. When the thickness of the layer U is 0.01 $\mu$m or more, adhesion between the polyester film and the layer M can be further exhibited. By setting the thickness of the layer U to 1.0 $\mu$m or less, the size of the bipolar battery in which it is to be incorporated can be kept from increasing when the laminated polyester film of the present invention is used as a resin current collector for bipolar battery.

The thickness of the layer M of the laminated polyester film of the present invention is not particularly limited, but is preferably 0.1 $\mu$m or more because the degradation of electrical properties due to the uneven thickness of the metal layer can be minimized when used as a resin current collector. The thickness of the layer M is more preferably 0.2 $\mu$m or more, and still more preferably 0.5 $\mu$m or more. Furthermore, by setting the thickness of the layer M to 5 $\mu$m or less, the increase in the battery weight can be reduced when used as a resin current collector for battery, which is preferable. More preferably, the thickness is 3 $\mu$m or less.

It is preferable that the adhesion strength between the outermost layer of the polyester film and the layer M in the polyester film of the laminated polyester film of the present invention is 2 N/15 mm or more on both sides. In a case where the polyester film having the layer M is incorporated into a power storage device as a current collector, when the current collector is deformed due to stress such as impact or heat, the interface between the polyester and the layer M at the end part will be separated, allowing other battery components to enter the interface, thereby reducing the efficiency and degrading the battery characteristics. Such reduction and degradation can be suppressed with the adhesion strength between the outermost layer of the polyester film and the layer M in the laminated polyester film being 2 N/15 mm or more on the both sides. The adhesion strength on both sides is more preferably 2.5 N/15 mm or more, and even more preferably 3.5 N/15 mm or more.

It is preferable that the laminated polyester film of the present invention has a layer M on the surfaces on both sides of the polyester film, and the volume resistivity (hereinafter also referred to as penetration resistivity) in the penetration direction of the laminated polyester film having the layer M obtained by measurement according to the method described below is preferably $1.0 \times 10^0$ $\Omega$cm or more and $1.0 \times 10^7$ $\Omega$cm or less. With the penetration resistivity of $1.0 \times 10^0$ $\Omega$ cm or more, in a case where the laminated polyester film of the present invention is incorporated into a power storage device as a resin current collector for bipolar battery, the polyester film acts as a resistor to suppress thermal runaway and ignition from the power storage device that occur due to a short circuit when the power storage device is damaged. With the penetration resistivity of $1.0 \times 10^7$ $\Omega$cm or less, in a case where the laminated polyester film of the present invention is incorporated into a bipolar power storage device as a resin current collector for bipolar battery, an increase in the internal resistance of the bipolar power storage device and a decrease in battery output can be suppressed. A range of the penetration resistivity is more preferably $1.0 \times 10^4$ $\Omega$cm or less.

[Resin current collector]

The resin current collector of the present invention preferably has a configuration including the polyester film and having a layer M on the surfaces on both sides of the polyester film. By using the polyester film having a good volume resistivity, the resin current collector of the present invention has excellent electrical conductivity in the thickness direction, which is expressed as penetration resistivity. In addition, the adhesion between the layer M and the polyester film is good. This makes it suitable for use as a current collector for bipolar battery described below.

[Current collector for bipolar battery]

The current collector for bipolar battery of the present invention is preferably configured to have different layers M on the surfaces on both sides of the polyester film in the configuration of the current collector. By using the current collector having excellent electrical conductivity in the thickness direction, when incorporated into a bipolar battery, excellent current value stability described below is obtained and the variation in battery characteristics can be suppressed. Moreover, the bipolar battery incorporating the current collector for bipolar battery exhibits excellent durability against external stresses such as deformation and impact. Furthermore, by controlling the shape of the carbon material contained in the polyester film, stable battery operation is achieved even in high-temperature environments.

The more preferred form of the metal element constituting the layer M of the current collector for bipolar battery has aluminum on one side and copper on the other side when used as a lithium-ion battery.

The bipolar battery current collector of the present invention preferably has as at least one surface layer of the polyester film a surface layer containing the resin $\alpha$ or resin $\beta$ as a main component.

The surface layer containing the resin $\alpha$ or resin $\beta$ as a main component has the effect of suppressing decomposition of the polyester resin due to electrochemical reactions on the negative electrode side in the battery. Therefore, it is preferably placed on the negative electrode side. In a more preferred configuration, the layer M containing copper element is in contact with the layer containing the resin $\alpha$ or resin $\beta$ as a main component.

For the purpose of suppressing decomposition of the polyester resin due to an electrochemical reaction on the negative electrode side in the battery, the current collector for bipolar battery of the present invention preferably has as a surface layer on at least one side of the polyester film a surface layer containing the resin $\alpha$ or resin $\beta$ as a main component, has a negative-electrode active material layer on the surface layer side, and has a positive-electrode active material layer on the side opposite to the surface layer side on which the negative-electrode active material layer is provided. A more preferred configuration is one having he negative-electrode active material layer/metal layer containing copper as a main component/layer containing resin $\alpha$ or resin $\beta$ as a main component, in this order. By adopting this configuration, the effects of the current collector for bipolar battery of the present invention can be exhibited over a long period of time.

[Power storage device]

The power storage device of the present invention is composed of an electrode assembly including a positive electrode and a negative electrode. It may contain an electrolytic solution, in which case it is preferable to include a separator interposed between the positive electrode and the negative electrode. A power storage device composed of a solid electrolyte without containing an electrolytic solution is also a preferred example. The power storage device may also include a battery case that houses the electrode assembly.

Examples of such power storage devices include primary batteries, secondary batteries, electric double layer capacitors, and aluminum electrolytic capacitors. In the present invention, the power storage devices refer to secondary batteries.

Examples of the secondary batteries include lithium secondary batteries, lead storage batteries, nickel-cadmium batteries, nickel-hydrogen batteries, nickel-iron storage batteries, silver oxide-zinc storage batteries, manganese dioxide-lithium secondary batteries, lithium cobaltate-carbonate secondary batteries, and vanadium-lithium secondary batteries.

Among them, secondary batteries are preferred because they can be used for a long period of time, and lithium secondary batteries that realize high energy density by using organic solvents are more preferred.

As the battery case, for example, an aluminum case, an iron case with a nickel-plated inner surface, or a case made of an aluminum laminate film can be used.

The shape of the battery case may be a pouch type, a cylindrical type, a square type, a coin type, or the like. Among them, the pouch type is preferred because it can realize a high energy density, and the shape can be freely designed at low cost.

The positive electrode includes a positive electrode material composed of an active material, a binder resin, and a conductive assistant laminated on a current collector. Examples of the active material include lithium-containing transition metal oxides with layered structures such as $LiCoO_2$, $LiNiO_2$, $Li(NiCoMn)O_2$, spinel-type manganese oxides such as $LiMn_2O_4$, and iron-based compounds such as $LiFePO_4$. As the binder resin, a resin having high oxidation resistance may be used. Specific examples include fluorine-containing resins, acrylic resins, and styrene-butadiene resins. Examples of the conductive assistant include carbon materials such as carbon black and graphite. As the current collector, a metal foil is suitable, and in particular, aluminum foil is often used.

The negative electrode includes a negative electrode material composed of an active material and a binder resin laminated on a current collector. Examples of the active materials include carbon materials such as artificial graphite, natural graphite, hard carbon, and soft carbon, lithium alloy-based materials such as tin and silicon, metallic materials such as lithium, and lithium titanate ($Li_4Ti_5O_{12}$). Example of the binder resin include fluorine-containing resins, acrylic resins, and styrene-butadiene resins. As the current collector, a metal foil is suitable, and in particular, copper foil is often used.

In the power storage device of the present invention, it is preferable to use a resin current collector for bipolar battery made of a film having both sides vacuum deposited, with a copper layer provided on one side and an aluminum layer provided on the opposite side.

When the power storage device of the present invention contains an electrolytic solution, the electrolytic solution is the place where ions are transferred between a positive electrode and a negative electrode in an electrochemical device such as a secondary battery, and the electrolytic solution has a configuration in which an electrolyte is dissolved in an organic solvent.

Examples of the electrolyte include $LiPF_6$, $LiBF_4$, and $LiClO_4$, and $LiPF_6$ is preferably used from the viewpoint of solubility in organic solvents and ionic conductivity.

Examples of the organic solvents include ethylene carbonate, propylene carbonate, fluoroethylene carbonate, dimethyl carbonate, diethyl carbonate, and ethyl methyl carbonate, and a mixture of two or more of these organic solvents may be used.

A method of producing a lithium secondary battery, which is preferably used among the power storage devices, will be described below.

The method of producing a lithium secondary battery is to first disperse an active material and a conductive assistant in a binder resin solution to prepare a coating liquid for electrodes, and then coat this coating liquid on a current collector and dry the solvent to obtain a positive electrode and a negative electrode. The film thickness of the coating film after drying is preferably 50 $\mu$m or more and 500 $\mu$m or less. Furthermore, it is preferable to apply pressure to the active material layer formed on the current collector, preferably by a roll press method or the like, to densify it and make the current collector into a thin film.

A separator for lithium secondary battery is placed between the obtained positive and negative electrodes so as to be in contact with the active material layer of each electrode, and enclosed in an exterior material such as an aluminum laminate film. After injecting the electrolytic solution, a negative electrode lead and a safety valve are installed, and the exterior material is sealed.

The lithium secondary battery thus obtained has high adhesion to the electrode and excellent battery characteristics, and can be produced at low cost.

[Secondary battery]

The power storage device produced by the aforementioned method or the like may be used as a secondary battery by connecting a plurality of power storage devices in series to meet the application of the power storage devices and the required battery capacity. In such case, the secondary battery is preferably a secondary battery which includes a plurality of power storage devices connected in series and is equipped with voltage management, temperature management, and safety devices, or a secondary battery which includes a plurality of module units connected in series or in parallel and is equipped with voltage management, temperature management, and safety devices, the module unit including a plurality of power storage devices in series and being enclosed in a case. A preferred example of the battery is one in which the power storage devices are connected to each other with tab lead wires (current extraction wires) and housed in a resin or metal module case for use as a secondary battery.

[Electric vehicle]

The secondary battery produced by the aforementioned method or the like is one of the preferred forms to be mounted in electric vehicles due to its excellent battery characteristics and durability. An electric vehicle is a vehicle in which some or all of the driving energy required while traveling is supplied from a secondary battery. Types of electric vehicles include BEVs (Battery Electric Vehicles), which are powered only by secondary batteries, and HEVs (Hybrid Electric Vehicles) and PHEVs (Plug-in Hybrid Electric Vehicles), which are powered by both fossil fuels such as gasoline and secondary batteries. The secondary battery of the present invention can be suitably used in any of these applications.

[Electric flying object]

The secondary battery produced by the aforementioned method or the like is one of the preferred forms to be mounted in electric flying objects due to its excellent battery characteristics and durability. An electric flying object is a flying object in which some or all of the driving energy required while flight is supplied from a secondary battery. Specific examples include electric aircraft such as drones, high-altitude platform systems (HAPS), air metro, and air taxi. The secondary battery of the present invention can be suitably used in any of these applications.

[Method of evaluating characteristics]

A. Polymer characteristics

(i) Intrinsic viscosity (IV)

A measurement sample (polyester resin (raw material) or a polyester film of the present invention) is dissolved in 100 ml of orthochlorophenol (solution concentration C (weight of measurement sample/volume of solution) = 1.2 g/100 ml), and the viscosity of the solution at 25°C is measured using an Ostwald viscometer. Similarly, the viscosity of the solvent is measured. The obtained solution viscosity and solvent viscosity are used to calculate $[\eta]$ according to the following formula (1), and the obtained value is regarded as the intrinsic viscosity (IV) of the entire polyester film.

$$\eta sp/C = [\eta] + K[\eta]^2 \cdot C \cdots (1)$$

(where $\eta sp$ = (solution viscosity/solvent viscosity) - 1, and K is the Huggins constant (assumed to be 0.343)). When the solution in which the measurement sample is dissolved contains insoluble matters such as inorganic particles, the measurement is performed using the following methods.

(1-1) The measurement sample is dissolved in 100 mL of orthochlorophenol to prepare a solution with a concentration of more than 1.2 g/100 mL. Here, the weight of the measurement sample subjected to orthochlorophenol is regarded as the weight of the measurement sample.
(1-2) Next, the solution containing insoluble matter is filtered, and the weight of the insoluble matter and the volume of the filtrate after filtration are measured.
(1-3) Orthochlorophenol is added to the filtrate after filtration such that (weight of measurement sample (g) - weight of insoluble matter (g))/(volume of filtrate after filtration (mL) + volume of added orthochlorophenol (mL)) is 1.2 g/100 mL. (For example, when a concentrated solution with a sample weight of 2.0 g per 100 mL of solution is prepared, and the weight of insoluble matter is 0.2 g upon filtration of the solvent and the volume of the filtrate after filtration is 99mL, 51mL of orthochlorophenol is added for adjustment. ((2.0 g - 0.2 g)/(99 mL + 51 mL) = 1.2 g/100 mL))
(1-4) The solution obtained in (1-3) is used to measure the viscosity at 25°C using an Ostwald viscometer, and the solution viscosity and solvent viscosity obtained are used to calculate $[\eta]$ according to the above formula (1), and the obtained value is regarded as the intrinsic viscosity (IV). The intrinsic viscosity of the polyester film of the invention obtained according to (1-1) to (1-4) above is taken as $IV_F$ (dl/g).

B. Film thickness

(i) Polyester film thickness T

The total thickness of the polyester film is measured using a dial gauge at five arbitrary points on ten stacked films in accordance with JIS K7130 (1992) A-2 method. The average value is divided by 10 to obtain the thickness T ($\mu$m) of the polyester film.

(ii) Multilayer thickness ($T_{P1}$, $T_{P2}$, $T_M$)

A cross-section of the polyester film of the present invention is cut out with a microtome in a direction parallel to the width direction of the film. The cross-section is subjected to a sputtering treatment using platinum-palladium, and then observed at a magnification of 5,000 to 20,000 times using a scanning electron microscope (JSM-6700, manufactured by the JEOL Ltd.) under conditions of applying an accelerating voltage of 3kV to determine the thickness ratio of the layers (layer P1, layer P2) constituting the laminated polyester film and the metal and/or metal compound layer (layer M). The thickness of each layer ($T_{P1}$, $T_{P2}$, $T_M$) is calculated from the multilayer ratio thus determined and the total film thickness obtained in the above subsection (i).

C. Constituent element of layer M

After the surface of the laminated film of the present invention is subjected to a sputtering treatment using platinum-palladium, the metal elements are identified using a scanning electron microscope (JSM-6700, manufactured by JEOL Ltd.) and an energy dispersive X-ray spectroscopy (EDX) detector (AZtecLiv Standard UltimMax65, manufactured by Oxford Instruments plc) attached thereto.

Measurements are performed with the acceleration voltage varied from 0.5 kV to 30 kV, and the detected elements are regarded as elements constituting the metal and/or metal compound layer (layer M). In this case, platinum and palladium are excluded, and when only platinum or palladium is detected through measurements at all accelerating voltages, these are regarded as elements constituting the metal and/or metal compound layer (layer M).

D. Evaluation of carbon material dispersion

In the same manner as in the above section B, a cross-sectional image (dimension in image: 18.5 $\mu$m in length $\times$ 25 $\mu$m in width) observed at a magnification of 5,000 times using a scanning electron microscope (JSM-6700 manufactured by JEOL Ltd.) is analyzed as follows using an image analysis software (Image-Pro Plus Version 4.0 for "Windows" (registered trademark) created by Planetron Corporation), to determine the volume-based average dispersed particle size and the number of dispersed particles of the carbon material.

(i) Image analysis conditions

After the cross-sectional image is captured using the software, 8-bit grayscale processing is performed by executing the 'Gray Scale 8' command under the 'Convert' menu. Then, at the 'Spatial Calibration' command under the 'Calibration' menu, the width of the captured image is set to 25 $\mu$m. Thereafter, the binarization processing is performed using the 'Binarization' command under the 'Process' menu.

(Binarization Processing Condition)

- '3 $\times$ 3' is selected
- Threshold setting: The automatic detection button to the right of the numerical entry field is pressed once, and the resulting value is used.
- Preview conditions: The background is displayed as white, and the detected particles are displayed as black.

After the binarization processing, 'Count/Size' command screen under the 'Measure' menu is opened to set the following particle detection conditions and particle analysis conditions, and 'Count' is executed to analyze the detected particles.

(Particle Detection Condition)

- Intensity Range Selection: 'Automatic Dark Objects' is selected.
- 'Measure Objects' is checked for selection.

(Object Extraction Option)

- 4-Connect/8-Connect: 4-Connect is selected
- Only 'Pre-Filter' and 'Fill holes' are checked for selection
- Smoothing: 0
- Clean Borders: 'All Borders' is selected.

(Particle Analysis Conditions)

The following is selected from the 'Measurement' tab in the 'Count/Size' command screen:

- Count (corrected)
- Diameter (average)

Here, "Diameter (average)" is an average diameter, which is the average value of the diameters passing through the center of gravity of the detected object, measured in 2° increments.

(ii) Number of dispersed carbon materials

The "Count (corrected)" value obtained in the above subsection (i) is regarded as the number of carbon materials in the image, and the average of the "Count (corrected)" values in five different fields of view divided by the area of the measurement field of view (18.5 $\mu$m long $\times$ 25 $\mu$m wide = 462.5 $\mu$m$^2$) is regarded as the number of dispersed carbon materials in the sample (particles/$\mu$m$^2$).

(iii) Volume-based average dispersed particle size of carbon material

Using the "Diameter (average)" of each particle detected in the above subsection (i), the volume-based average dispersed particle size is calculated according to the following formula (2). The volume-based average dispersed particle size is determined for five different fields of view, and the average value is regarded as the volume-based average dispersed particle size R ($\mu$m) of the carbon material of the sample.

R ($\mu$m) = ($\Sigma$(diameter (average ))$^2$ $\times$ number of particles)/($\Sigma$(diameter (average)) $\times$ number of particles)                          formula (2).

(iv) Aspect ratio of carbon material

In the same manner as described in the above subsection (i), the aspect ratio of the carbon material is determined in the image obtained from the obtained image using the aspect ratio (Aspect value) in the 'Count/Size' command screen.

For five different fields of view, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the carbon material (carbon material C1) existing in the region where the aspect ratio is 1 or more and less than 5. When a plurality of local maximum values exist in the region where the aspect ratio is 1 or more and less than 5, the weighted average value using the vertical axis values shall be the aspect ratio of the carbon material (carbon material C1) existing in the region where the aspect ratio is 1 or more and less than 5.

Similarly, when a local maximum value exists in the region where the aspect ratio is 5 or more, the local maximum value shall be the aspect ratio of the carbon material (carbon material C2) existing in the region where the aspect ratio is 5 or more. When a plurality of local maximum values exist in the region where the aspect ratio is 5 or more, the weighted average value using the vertical axis values shall be the aspect ratio of the carbon material (carbon material C2) existing in the region where the aspect ratio is 5 or more.

For each of the five different fields of view, the aspect ratios of the carbon material (carbon material C1) existing in the region where the aspect ratio is 1 or more and less than 5 and the carbon material (carbon material C2) existing in the region where the aspect ratio is 5 or more are determined, and average values of the five fields of view in the regions shall be the aspect ratios of the carbon material C1 and the carbon material C2, respectively, in the polyester film.

(v) Ratio of area (SC1) occupied by carbon material C1 to area (SC2) occupied by carbon material C2

The sum of the area (SC1) of the carbon material (carbon material C1) existing in the region where the aspect ratio is 1 or more and less than 5 as confirmed by the count histogram described in the above subsection (iv) is determined. Subsequently, the sum of the area (SC2) of the carbon material (carbon material C2) existing in the region where the aspect ratio is 5 or more is determined, and the value obtained by dividing the SC1 by the SC2 is considered as the ratio of the area (SC1) occupied by the carbon material C1 to the area (SC2) occupied by the carbon material C2 in the layer P1 included in the sample.

E. Measurement of volume resistivity

Ten samples measuring 10 cm $\times$ 10 cm are taken from different positions of the polyester film of the present invention, and after humidity conditioning for one day in an environment at a temperature of 23°C and a humidity of 65%, the volume resistivity is measured according to the following method.

(i) Resistivity meter measurement

A low resistivity meter (Loresta-GP series MCP-T360 manufactured by Mitsubishi Chemical Group Corporation) in the volume resistivity measurement mode (unit: Ωcm) is used for measurement. The film thickness of the sample is input into the low resistivity meter for measurement. Measurements are made for all ten samples, and the average value is regarded as the volume resistivity of the sample.

When the volume resistivity measured using the low resistivity meter is beyond the upper measurement limit, manual measurement is performed using a high resistivity meter (Hiresta UP series MCP-HT450) according to the following procedure. A sample is placed on the attached register table, and then the attached URS probe is pressed against it, and after held for 1 minute under a voltage of 10 V, the volume resistivity is determined. Measurements are made for all ten samples, and the average value is regarded as the volume resistivity of the sample.

When the volume resistivity is still beyond the upper measurement limit in the above-mentioned case, the voltage setting is changed to 500 V and then to 1000 V, and the value obtained at the condition with the lowest voltage among the conditions under which measurement values are obtained is taken as the volume resistivity of the sample. The measurement is performed in an environment of 23°C and 65% RH.

(ii) Evaluation of in-plane variation of volume resistivity

Ten samples measured in the preceding subsection (i) are measured, and the maximum, minimum and average values of the ten measured values are used to calculate the value according to the following formula (3), which is taken as the in-plane variation value of the volume resistivity of the sample.

$$(\text{In-plane variation}) = 100 \times (\text{maximum value} - \text{minimum value})/(\text{average value}) \cdots$$

formula (3)

F. DSC measurement

The polyester film of the present invention or its raw material is measured using a Thermo Plus Evo2 series DSC Vesta manufactured by the Rigaku Corporation as a differential scanning calorimeter (DSC). Approximately 5 mg of a sample is placed on an aluminum tray and heated from room temperature to 300°C at a heating rate of 20 °C /min and held for 5 minutes (1st Run measurement). The temperature of the exothermic peak originating from the glass transition observed at that time is designated as a glass transition temperature (Tg), and the peak temperature of the endothermic peak of melting is designated as a melting point (Tm), and the average values of the three measurements are designated as the glass transition temperature (Tg) and the melting point (Tm) of the sample.

In the DSC chart of the polyester film of the present invention, when it is difficult to distinguish from the minute endothermic peak Tmeta that appears immediately before the melting point, the following measurement is performed in addition to the above-mentioned 1st Run measurement. The temperature is raised to 300°C at a heating rate of 20 °C/min and held for 5 minutes, then quenched using liquid nitrogen, and again raised to 300°C at a heating rate of 20 °C/min (2nd Run measurement). The number and temperature of the melting point peaks are confirmed, and the peak that disappears from the 1st Run measurement is regarded as a minute endothermic peak Tmeta that appears immediately before the melting point temperature, and is excluded from the 1st Run measurement data.

G. Carbon content and carbon species identification

(i) Amount of carbon material added

The layer P1 or layer P2 portion of the polyester film of the present invention is placed in 200 ml of hexafluoroisopropanol (HFIP) to dissolve the polyester resin. After dissolution is completed, 200 ml of water is added to the solution, the liquid is then centrifuged to settle the particles, and the supernatant is removed. The particles are washed with additional water and centrifuged twice. The particles thus obtained are dried and their mass is measured to calculate the particle content (% by mass) in each layer. The above-mentioned procedure is performed for three different locations of the polyester film of the present invention, and the content of the particles thus obtained is taken as the content of the carbon material contained in the sample.

When a plurality of types of carbon materials are identified by the identification analysis in the next subsection (ii), the concentration of each carbon material is calculated using the abundance ratio of the carbon materials observed in the next section (ii).

(ii) Identification of carbon species

The carbon particles obtained in the above section 1 are subjected to Raman spectroscopy to observe peaks around 1580 cm$^{-1}$ derived from the graphite structure (sp$^2$ bond), generally referred to as the G band, and around 1350 cm$^{-1}$ derived from the diamond structure (sp$^3$ bond), generally referred to as the D band, and identification is made based on the intensity ratio of these peaks. The identification is based on comparison with known Raman spectral databases and peak intensity data obtained from measurements of commercially available carbon materials. In addition, the carbon material obtained in the above subsection (i) is observed by a transmission electron microscope (TEM) at a magnification of 50,000 to 500,000 times to observe the resulting shape, which is combined with the results of the Raman spectroscopy in the previous section to identify the type of carbon material present in the sample. When a plurality of carbon materials are observed, the number of each carbon material observed by the TEM is converted into a volume ratio, which is regarded as the abundance ratio of each carbon material.

H. Quantitative evaluation of resins and compounds constituting polyester film

(i) Identification of compound having ether bond in its main chain

The entire layer, the layer P1, and the layer P2 of the polyester film of the present invention are immersed in methanol, the soluble portion is separated by centrifugation, and the supernatant is collected to extract the compound having an ether bond in its main chain contained in the polyester film. The extract is subjected to measurement by matrix-assisted laser desorption/ionization mass spectrometry (MALDI-MS). The structure of the compound contained is identified from the obtained mass spectra and the spectra of the nuclear magnetic resonance method ($^1$H-NMR) described below.

Similarly, 50 mg of the entire layer, layer P1, or layer P2 of the polyester film of the present invention is weighed, the compound having an ether bond in its main chain is extracted with deuterated methanol (Methanol-d$_4$), 0.7 ml of deuterated methanol (Methanol-d$_4$) with 2.63 mg of octamethylcyclotetrasiloxane (OMTS) added thereto is added to dissolve the soluble portion, followed by centrifugation. The supernatant from the centrifugation is collected and measured by nuclear magnetic resonance ($^1$H-NMR). The compounds contained in the sample are quantified from the ratio of the NMR spectrum area of the added internal standard material to the spectrum area of the extract.

($^1$H-NMR measurement conditions)

Apparatus used: ECA-400 (manufactured by JEOL RESONANCE Co., Ltd.)
Measurement method: Single pulse
Observed frequency: 399.8 MHz
Pulse width: 6.45 s (45 pulses)

Lock solvent: Deuterated methanol (Methanol-$d_4$)
Chemical shift standard: Deuterated solvent residual proton (3.35 ppm)
Observed width: about 8000 Hz (about - 2 ppm to 18 ppm)
Number of data points: 32768
Waiting time: 30 seconds
Cumulative number: 128 times
Measurement temperature: Room temperature (21°C)
Sample rotational frequency: 15 Hz.

(ii) Quantitative analysis of resins constituting polyester

In the same manner as in (i) above, the entire layer, the layer P1, and the layer P2 portions of the polyester film of the present invention are immersed in a mixed solution of equal amounts of 1,1,1,2,2,2-hexafluoro-2-isopropanol (HFIP), the soluble portion is separated by centrifugation, and the supernatant is collected to extract the resin component contained in the polyester film. The extract is subjected to measurement by matrix-assisted laser desorption/ionization mass spectrometry (MALDI-MS). The structure of the compound contained is identified from the obtained mass spectra and the spectra of the nuclear magnetic resonance method ($^1$H-NMR) described below.

Fifty milligrams of the entire layer, layer P1, or layer P2 portions of the polyester film of the present invention are weighed, and 2.63 mg of octamethylcyclotetrasiloxane (OMTS) is added as an internal standard substance. 0.7 ml of deuterated 1,1,1,2,2,2-hexafluoro-2-isopropanol (HFIP-$d_2$) is added to dissolve the soluble portion, followed by centrifugation. The supernatant from the centrifugation is collected and measured by nuclear magnetic resonance ($^1$H-NMR). The compounds contained in the sample are quantified from the ratio of the NMR spectrum area of the added internal standard material to the spectrum area of the extract.

($^1$H-NMR measurement conditions)

Apparatus used: ECA-400 (manufactured by JEOL RESONANCE Co., Ltd.)
Measurement method: Single pulse
Observed frequency: 399.8 MHz
Pulse width :6.45s (45 pulse)
Lock solvent: HFIP-$d_2$
Chemical shift standard: Deuterated solvent residual proton (4.41 ppm)
Observed width: about 8000Hz (about - 2ppm to 18ppm)
Number of data points: 32768
Waiting time: 30 seconds
Cumulative number: 128 times
Measurement temperature: Room temperature (21°C)
Sample rotational frequency: 15 Hz.

I. Hansen solubility parameter

The Hansen solubility parameter of the polyester resin or the compound having an ether bond in its main chain contained in the polyester film of the present invention is calculated using the calculation software attached to the Hansen Solubility Parameter analysis software HSPiP (Hansen Solubility Parameters in Practice). The Hansen solubility parameters (dispersion force component (dD: $MPa^{1/2}$), polar component (dP: $MPa^{1/2}$), and hydrogen bonding component (dH: $MPa^{1/2}$)) calculated by entering the 4-fold repeat structure of the target polymer molecular chain using the Polymer mode of the software are used as the values possessed by the polyester resin or the compound having an ether bond in its main chain.

As for the compatibility of each polyester resin or compound having an ether bond in its main chain with a carbon material, the $\Delta$HSP value ($MPa^{1/2}$), obtained according to the following formula (4) using the dispersion force component (dD: $MPa^{1/2}$), polar component (dP: $MPa^{1/2}$), and hydrogen bonding component (dH: $MPa^{1/2}$) of the Hansen solubility parameters, is calculated and used as the compatibility of the polyester resin or the compound having an ether bond in its main chain with a carbon material.

$$\Delta HSP \ (MPa^{1/2}) = \{4 \cdot (dDc - dDp)^2 + (dPc - dPp)^2 + (dHc - dHp)^2\}^{1/2} \cdots$$

formula (4)

where dDp, dPp, and dHp are the Hansen solubility parameter values of a polyester resin or a compound having an ether bond in its main chain, and dDc, dPc, and dHc are the Hansen solubility parameter values of a carbon material. The following values are used to calculate the ΔHSP value.

(Hansen solubility parameters of carbon material)

- Dispersion force component (dD: $MPa^{1/2}$): 18.8
- Polar component (dP: $MPa^{1/2}$): 4.6
- Hydrogen bonding component (dH: $MPa^{1/2}$): 4.3.

J. Evaluation of mechanical property of polyester film

The elongation at break and breaking strength of the polyester film are measured. A rectangular sample measuring 150 mm long and 10 mm wide was cut from the polyester film such that the long side aligned the longitudinal direction, taking the unwinding direction of the roll as the longitudinal direction of the polyester film. According to the following method specified in ASTM-D882, a tensile test is performed using an Instron type tensile tester (AMF/RTA-100, manufactured by ORIENTEC CO., LTD.) with a sample film having a width of 10 mm set such that the length between chucks is 50 mm, at a tensile speed of 300 mm/min, and the elongation (elongation at break) and strength (breaking strength) at the time of sample breakage are read. The measurement is carried out five times, and the average values are regarded as the elongation at break and breaking strength in the longitudinal direction of the polyester film.

In the same manner as the measurement in the longitudinal direction above, the polyester film is cut into a rectangular shape measuring 150 mm long and 10 mm wide with the long side aligning the width direction, taking the in-plane 90°-rotated longitudinal direction as the width direction, and the elongation at break and breaking strength of the sample are measured. The measurement is carried out five times, and the average values are regarded as the elongation at break and breaking strength in the width direction of the polyester film.

When the longitudinal direction and the width direction of the polyester film are unknown, the elongation at break and breaking strength are measured with respect to four directions: a specific direction and directions rotated 45°, 90°, and 135° from the specific direction in the in-plane direction. The maximum values of the elongation at break and breaking strength for the four directions thus obtained are taken as the elongation at break and breaking strength of the polyester film for which the longitudinal direction and the width direction are unknown.

K. Adhesion strength between layer M and polyester film

A 15 cm square of sample is taken from the laminated polyester film which has a layer M on the surfaces on both sides thereof. The following adhesive coating material is applied on the surface of the layer M to provide an adhesive layer having a thickness of 2 μm.

(Adhesive coating material)

- Adhesive resin: "DIC DRY" (registered trademark) LX500 (manufactured by DIC Corporation), solid content concentration: 60 % by mass
- Curing agent: "DIC DRY" (registered trademark) KW-75 (manufactured by DIC Corporation), solid content concentration: 75 % by mass
- Solvent : Ethyl acetate

The LX500 and KW-75 are mixed to a mass ratio of 10:1, and then diluted with ethyl acetate to a solid content of 16% by mass. The coating is then applied using a metabar (#10) and dried in an oven heated to 85°C for 30 seconds.

The laminated polyester film of the present invention with an adhesive layer formed thereon is fixed to a metal plate having a thickness of 2 mm in the direction in which the adhesive layer is exposed. Next, a PET film having a thickness

of 38 μm (T60, manufactured by Toray Industries, Inc.) cut to a size of 150 mm × 300 mm as a release film is laminated on the side opposite to the surface in contact with the layer M of the adhesive layer while superimposing the short side on one side of the sample having the adhesive layer, under the following conditions. Any portions that have air bubbles or lamination wrinkles generated during lamination will not be used as samples for the adhesion evaluation described below.

(Lamination conditions)

- Laminating roll temperature: Ordinary temperature
- Laminating roll pressure: 0.35 MPa
- Conveyance speed: 0.5 m/min

The laminate sample is placed in an oven heated to 40°C and aged for 48 hours. Thereafter, the laminate sample is cut into to 15 mm × 300 mm, and the surface opposite to the release film is fixed to a metal plate with a double-sided tape. For the metal plate having the sample attached thereto, a portion that does not have the sample is fixed to a chuck on one side of a testing device "Tensilon" (registered trademark) RTG-1210. Subsequently, the release film is fixed to the other chuck of the above-mentioned device, and then a 180° peel test is carried out at a test speed of 50 mm/min. A peel test is performed on three different samples, and the average value of the obtained stress is regarded as the adhesion strength between the layer M and the polyester film.

L. Penetration resistivity

A 20 mm square sample is taken from the laminated polyester film of the present invention, which has a layer M on each of both surfaces, and used as an evaluation sample. The sample is sandwiched from both sides between circular copper electrodes having a diameter of 20 mm and a thickness of 10 mm and equipped with electrode tabs, and a pressure of 0.38 MPa is applied in the thickness direction of the sample. The electrode tab is connected to a milliohmmeter GOM-805 manufactured by TEXIO TECHNOLOGY CORPORATION, and the resistance value is read one minute after it is displayed under the condition of +6.25V DC. The obtained resistance value is multiplied by the electrode area ($3.14 \text{ cm}^2$) and divided by the thickness (cm) of the sample to obtain the penetration resistivity ($\Omega$cm). Similar measurements are performed on three different samples to determine their penetration resistivities, and the average value is regarded as the penetration resistivity of the sample.

[Method of evaluating application characteristics]

M. Extrusion stability

In the production step of the polyester film of the present invention, a 10 m unstretched film roll is collected for the unstretched film obtained by melt-extrusion from a die and cooling and forming into a sheet using the electrostatic application method on a casting drum.

For the obtained unstretched film roll, the thickness of the unstretched film is measured every 50 cm in the winding direction. The average value of all the measured values is taken as the average thickness of the unstretched film, the standard deviation of all the measured values is taken as the standard deviation of the thickness of the unstretched film, and the percentage of the value obtained by dividing the standard deviation of the thickness by the average thickness is taken as the thickness unevenness value (%) of the unstretched film, and the discharge stability is evaluated as follows:

A: The thickness unevenness value (%) of the unstretched film is 10 or less.
B: The thickness unevenness value (%) of the unstretched film is more than 10 and 15 or less.
C: The thickness unevenness value (%) of the unstretched film is more than 15 and 20 or less.
D: The thickness unevenness value (%) of the unstretched film is more than 20.

As for discharge stability evaluation, A to C are preferred, and A is the best among them.

N. Film formability

The polyester film is wound at a winding speed of 20 m/min or more for 1000 m. The film formability is evaluated as follows based on the number of times the film breaks during collection of the film roll.

A: The number of times the film breaks is twice or less.
B: The number of times the film breaks is three times or more and four times or less.
C: The number of times the film breaks is five times or more and six times or less.
D: The number of times the film breaks is seven times or more.

As for film formability evaluation, A to C are good, and A is the best among them.

O. Evaluation of electric properties and processability

(i) Evaluation of electrical conductivity

The polyester film of the present invention is evaluated according to "E. Measurement of volume resistivity" described above and rated as follows:

AA: The volume resistivity is $1.0 \times 10^0$ Ωcm or more and less than $1.0 \times 10^4$ Ωcm
A: The volume resistivity is $1.0 \times 10^4$ Ωcm or more and less than $1.0 \times 10^6$ Ωcm
B: The volume resistivity is $1.0 \times 10^6$ Ωcm or more and less than $1.0 \times 10^7$ Ωcm
C: The volume resistivity is $1.0 \times 10^7$ Ωcm or more and less than $1.0 \times 10^8$ Ωcm
D: The volume resistivity is $1.0 \times 10^8$ Ωcm or more.

As for electrical conductivity evaluation, AA to C are good, and AA is the best among them.

(ii) Evaluation of electrical conductivity after stretching

The polyester film of the present invention is cut into 10 pieces measuring 10 cm × 10 cm. Both ends of the cut sample are sandwiched between two metal plates laminated with rubber bonded thereto, thereby fixing the sample. In this case, the distance between the metal plates fixing both ends, that is, the exposed portion of the polyester film is 50 mm. Then, an Instron type tensile tester (AMF/RTA-100, manufactured by ORIENTEC CO., LTD.) is used to perform a tensile test in which a metal plate with a cut out sample fixed to the chuck portion of the machine is used to deform the polyester film by 2%. For a metal plate with rubber bonded thereto, specifically, the initial sample length is 50 mm, and a tensile test is performed at a tensile speed of 300 mm/min until the sample length is elongated by 1 mm. The volume resistivity of the stretched portion is then measured in the same manner as in "E. Measurement of volume resistivity" above. Using the volume resistivity R1 (Ωcm) thus obtained and the volume resistivity R0 (Ωcm) obtained in the above subsection (i), the rate of increase in volume resistivity obtained by the following formula (5) is evaluated as follows.

$$\text{Rate of increase in volume resistivity (\%)} = 100 \times (R1 - R0)/R0 \cdots \text{formula (5)}$$

A: Rate of increase in volume resistivity is 30% or less
B: Rate of increase in volume resistivity is more than 30% and 50% or less
C: Rate of increase in volume resistivity is more than 50% and 100% or less
D: Rate of increase in volume resistivity is more than 100%.

As for evaluation of electrical conductivity after stretching, A to C are preferable, and A is the best among them.

(iii) Evaluation of electrical conductivity after bending

The polyester film of the present invention is cut into 10 pieces measuring 10 cm × 10 cm. A 10 cm × 10 cm sample is attached to a SUS cylinder having a diameter of 3 cm and a length of 15 cm with a load of 300 g applied from both ends. The sample attached to the cylinder is placed in an oven heated to 50°C and subjected to heat treatment for 1 hour.
After the heat treatment, the sample is removed from the cylinder, and the volume resistivity of the central portion of the sample is measured in the same manner as in "E. Measurement of volume resistivity" above. Using the volume resistivity R2 (Ωcm) thus obtained and the volume resistivity R0 (Ωcm) obtained in the above subsection (i), the rate of increase in volume resistivity obtained by the following formula (6) is evaluated as follows.

$$\text{Rate of increase in volume resistivity (\%)} = 100 \times (R2 - R0)/R0 \cdots \text{formula (6)}$$

A: Rate of increase in volume resistivity is 30% or less
B: Rate of increase in volume resistivity is more than 30% and 50% or less
C: Rate of increase in volume resistivity is more than 50% and 100% or less
D: Rate of increase in volume resistivity is more than 100%.

As for evaluation of electrical conductivity after bending, A to C are preferable, and A is the best among them.

P. Evaluation of bipolar battery

(i) Production of resin current collector for bipolar battery

A resin current collector for bipolar battery is produced by forming a film having a copper layer on one side and an aluminum layer on the opposite side of the polyester film of the present invention by vacuum deposition processing on both sides of the film.

Specifically, a rolled raw material of the polyester film is placed in a roll-type vacuum evaporation system (EWC-060, manufactured by ULVAC, Inc.), and an aluminum ingot is heated by the induction heating deposition method employing a carbon crucible to provide an aluminum metal layer by the vacuum deposition method. At this time, the conveyance speed and output conditions are adjusted so that the aluminum metal layer has a predetermined thickness, and vacuum deposition is performed. Next, a roll of the polyester film having an aluminum metal layer on one side thereof is placed again in the roll-type vacuum evaporation system (EWC-060, manufactured by ULVAC, Inc.), and a copper ingot is heated by the induction heating deposition method employing a carbon crucible to provide a copper metal layer by the vacuum deposition method on the surface of the polyester film opposite to the surface on which the aluminum metal layer is provided. At this time, the conveyance speed and output conditions are adjusted such that the copper metal layer has a predetermined thickness, and vacuum deposition is performed.

(ii) Active material for positive electrode and active material for negative electrode

A positive-electrode active material slurry is prepared by mixing 85% by mass of $LiMn_2O_4$ as a positive-electrode active material, 5% by mass of acetylene black as a conductive assistant, 10% by mass of polyvinylidene fluoride (PVDF) as a binder, and an appropriate amount of N-methyl-2-pyrrolidone (NMP) as a slurry viscosity adjusting solvent.
In addition, as a positive electrode to be placed at the end of the bipolar battery, the positive-electrode active material slurry is applied onto an aluminum foil having a thickness of 30 $\mu$m, and cured similarly by thermal polymerization to prepare a terminal positive electrode in which a positive electrode is formed on the aluminum.
A negative-electrode active material slurry is prepared by mixing 90 parts by mass of hard carbon as a negative-electrode active material, 5 parts by mass of acetylene black as a conductive assistant, 10 parts by mass of PVDF as a binder, and an appropriate amount of NMP as a slurry viscosity adjusting solvent.
In addition, as a negative electrode to be placed at the end of the bipolar battery, the negative-electrode active material slurry is applied onto a copper foil having a thickness of 30 $\mu$m, and cured similarly by thermal polymerization to prepare a terminal negative electrode in which a negative electrode is formed on the copper foil.

(iii) Production of battery evaluation cell

<Positive electrode-resin current collector assembly>

After the positive-electrode active material slurry is applied with a doctor blade onto the surface of the aluminum layer in the laminated polyester film having the metal layer, the active-electrode active material slurry coating film is pressed to attain the film thickness of the current collector of 30 $\mu$m.

<Production of electrolytic layer>

An electrolyte slurry is prepared using PEO (polyethylene oxide) (64.5% by mass) as an ion conductive polymer, $Li(C_2F_5SO_2)_2N$ (35.5% by mass) as a supporting salt, and acetonitrile as a viscosity adjusting solvent.
An electrolyte slurry is poured between glass plates with a gap of 50 $\mu$m therebetween, and then dried to produce an electrolyte layer of 40 $\mu$m.

<Preparation of cell for evaluation of bipolar battery>

The prepared terminal positive electrode, negative electrode, terminal negative electrode, electrolyte layer, and positive electrode-current collector assembly are cut to a size of 120 mm × 70 mm. The terminal positive and negative electrodes, the positive electrode-current collector assembly, and the electrolyte layer are successively laminated twice, and finally the terminal negative electrode is bonded to prepare a three-layer bipolar battery.

An Al tab and a Ni tab are welded to the terminal positive electrode and the terminal negative electrode, respectively, and the produced battery is sealed in an aluminum laminate under highly reduced pressure to complete a cell for evaluation of bipolar battery.

(iv) Current value measurement during charging and discharging

The cell for evaluation of bipolar battery is charged and discharged up to 10 mV (Li$^+$/Li), and the current value generated is measured.

(v) Current value stability

Sampling is performed at 10 different locations of a laminated polyester film having metal layers on both sides, and 10 cells for evaluation of bipolar battery are produced according to the above subsections (i) to (iii).
Next, charging and discharging operations are performed in accordance with the above subsection (iv) , and the current value flowing through each of the 10 cells for evaluation of bipolar battery is recorded. The current value stability is evaluated based on the variation of the current value from the average value of the obtained current values during the charging and discharging operation as follows:

AA: The current value does not decrease by half compared to the average value.
A: The current value decreases to half of the average value once or less.
B: The current value decreases to half of the average value twice or more and three times or less.
C: The current value decreases to half of the average value four times or more and five times or less.
D: The current value decreases to half of the average value six times or more, or the current value decreases to zero once or more.

As for current value stability, AA to C are good, and AA is the best among them.

(vi) Battery characteristics variation

Regarding the current values during charging and discharging performed in (v) above, the variation determined by the following formula (7) using the average value of the 10 current values obtained and the difference between the maximum and minimum values of the 10 current values is regarded as the battery characteristics variation, and evaluation is performed as follows.

(Battery characteristics variation) = 100 × (maximum value - minimum value)/(average value )        formula (7)

AA: Battery characteristics variation is 8% or less.
A: Battery characteristics variation is more than 8% and 10% or less.
B: Battery characteristics variation is more than 10% and 20% or less.
C: Battery characteristics variation is more than 20% and 30% or less.
D: Battery characteristics variation is more than 30%.

As for battery characteristics variation, AA to C are good, and AA is the best among them.

(viii) High temperature stability of battery

Sampling is performed at 10 different locations of a laminated polyester film having metal layers on both sides, and 10 cells for evaluation of bipolar battery are produced according to the above subsections (i) to (iii).
Next, charging and discharging operations are performed in accordance with the above subsection (iv), and the current value flowing through each of the 10 cells for evaluation of bipolar battery is recorded. Thereafter, the aforementioned 10 cells for evaluation of bipolar battery are heated in an air-circulating thermostatic chamber at a heating rate of 5 °C/minute from 25°C to 70°C. After heating is then continued for 30 minutes, charging and discharging operations are performed in accordance with the above subsection (iv), and the current values flowing through each of the 10 cells for evaluation of bipolar battery are recorded. The decrease (%) in current value before and after the heat treatment was used for evaluation as follows:

A: The decrease in current value before and after the heat treatment is 20% or less.
B: The decrease in current value before and after the heat treatment is more than 20% and 40% or less.
C: The decrease in current value before and after the heat treatment is more than 40% and 50% or less.
D: The decrease in current value before and after the heat treatment is more than 50%.

As for high temperature stability of battery, A to C are good, and A is the best among them.

(ix) Heating deformation durability of battery

Sampling is performed at 10 different locations of a laminated polyester film having metal layers on both sides, and 10 cells for evaluation of bipolar battery are produced according to the above subsections (i) to (iii).

Next, in accordance with the heating test described in JIS 8715-2 (2019), 10 cells for evaluation of bipolar battery are fully charged and heated in an air-circulating thermostatic chamber at a heating rate of 5 °C/minute from 25°C to 85°C. The cells for evaluation of bipolar battery were kept at 85°C for 3 hours, then removed from the thermostatic chamber, and the ten cells for evaluation of bipolar battery were evaluated based on their states as follows:

A: Out of 10 cells, one or less cell is ignited and ruptured.
B: Out of 10 cells, two or more and three or less cells are ignited and ruptured.
C: Out of 10 cells, four or more and five or less cells are ignited and ruptured.
D: Out of 10 cells, six or more cells are ignited and ruptured.

As for heating deformation durability of battery, A to C are good, and A is the best among them.

(x) Battery impact durability

Sampling is performed at 10 different locations of a laminated polyester film having metal layers on both sides, and 10 cells for evaluation of bipolar battery are produced according to the above subsections (i) to (iii).

Next, in accordance with the impact test described in JIS 8715-2 (2019), 10 cells for evaluation of bipolar battery are placed on a flat concrete floor in a discharged state to 50% of the rating capacity. A round rod made of SUS316, 15.8 mm in diameter and longer than the maximum dimension of the cell for evaluation of bipolar battery, is placed across the center of the cell for evaluation of bipolar battery, and a weight with a mass of 9.1 kg is dropped from a height of 610 mm onto the round rod. The ten cells for evaluation of bipolar battery were evaluated based on their states as follows:

A: Out of 10 cells, one or less cell is ignited and ruptured.
B: Out of 10 cells, two or more and three or less cells are ignited and ruptured.
C: Out of 10 cells, four or more and five or less cells are ignited and ruptured.
D: Out of 10 cells, six or more cells are ignited and ruptured.

As for battery impact durability, A to C are good, and A is the best among them. Examples

The present invention will be described below with reference to examples, but the present invention is not necessarily limited to these examples.

(Method of producing polyester resin)

[Production of Polyester-1]

To 1 mole of dimethyl terephthalate, 1.9 moles of ethylene glycol was added, and to 100 parts by mass of dimethyl terephthalate, 0.05 parts by mass of magnesium acetate tetrahydrate and 0.015 parts by mass of phosphoric acid were added for heat transesterification. Subsequently, 0.025 parts by mass of antimony trioxide was added, and the mixture was heated to raise the temperature and polycondensed under a highly reduced pressure to obtain pellets of Polyester-1, which was polyethylene terephthalate substantially free of particles ($\Delta$HSP value with carbon material: 5.7 MPa$^{1/2}$). The resulting melt-polymerized Polyester-1 had a glass transition temperature of 81°C, a melting point of 255°C, and an intrinsic viscosity of 0.70 dl/g.

[Production of Polyester-2]

To 1 mole of dicarboxylic acid component composed of 0.90 mole of dimethyl terephthalate (DMT) and 0.10 mole of dimethyl isophthalate, 1.9 mole of 1,4-butanediol was added, and to 100 parts by mass of the dicarboxylic acid component, 0.05 parts by mass of magnesium acetate tetrahydrate and 0.015 parts by mass of phosphoric acid were added for heat transesterification. Subsequently, 0.025 parts by mass of antimony trioxide was added, and the mixture was heated to raise the temperature and polycondensed under a highly reduced pressure to obtain pellets of Polyester-2, which was polyethylene terephthalate ($\Delta$HSP value with carbon material: 4.9 MPa$^{1/2}$) copolymerized with 10 mol% of an isophthalic acid component substantially free of particles. The resulting melt-polymerized Polyester-2 had a melting point of 208°C and an intrinsic viscosity of 0.80 dl/g.

[Production of Polyester-3]

To 1 mole of dicarboxylic acid component composed of 0.95 mole of dimethyl terephthalate (DMT) and 0.05 mole of dimethyl isophthalate, 1.9 mole of cyclohexanedimethanol was added, and to 100 parts by mass of the dicarboxylic acid component, 0.05 parts by mass of magnesium acetate tetrahydrate and 0.015 parts by mass of phosphoric acid were added for heat transesterification. Subsequently, 0.025 parts by mass of antimony trioxide was added, and the mixture was heated to raise the temperature and polycondensed under a highly reduced pressure to obtain pellets of Polyester-3, which was polycyclohexylenedimethylene terephthalate ($\Delta$HSP value with carbon material: 4.8 MPa$^{1/2}$) copolymerized with 5 mol% of an isophthalic acid component substantially free of particles. The resulting melt-polymerized Polyester-3 had a glass transition temperature of 92°C, a melting point of 280°C, and an intrinsic viscosity of 0.95 dl/g.

[Production of Polyester-4]

By adjusting the polymerization time in [Production of Polyester-3] above, pellets of Polyester-4 were obtained, which was polycyclohexylenedimethylene terephthalate ($\Delta$HSP value with carbon material: 4.8 MPa$^{1/2}$) copolymerized with 5 mol % of an isophthalic acid component substantially free of particles. The resulting melt-polymerized Polyester-4 had a glass transition temperature of 88°C, a melting point of 280°C, and an intrinsic viscosity of 0.75 dl/g.

[Production of Polyester-5]

To 1 mole of dimethyl 2,6-naphthalate, 1.9 moles of ethylene glycol was added, and to 100 parts by mass of dimethyl terephthalate, 0.05 parts by mass of magnesium acetate tetrahydrate and 0.015 parts by mass of phosphoric acid were added for heat transesterification. Subsequently, 0.025 parts by mass of antimony trioxide was added, and the mixture was heated to raise the temperature and polycondensed under a highly reduced pressure to obtain pellets of Polyester-5, which is polyethylene naphthalate ($\Delta$HSP value with carbon material: 5.2 MPa$^{1/2}$) substantially free of particles. Polyester-5 had a glass transition temperature of 118°C, a melting point of 265°C, and an intrinsic viscosity of 0.70 dl/g.

(Compound having carbon bond in its main chain)

[Polyether compound-1]

Polyethylene glycol having a molecular weight of 4000 ($\Delta$HSP value with carbon material: 2.6 MPa$^{1/2}$) was used as Polyether compound-1.

[Polyether compound-2]

A PBT/PTMG copolymerized elastomer with a melting point of 180°C having a structure in which 70 mol% of the glycol component of polybutylene terephthalate (PBT, $\Delta$HSP value with carbon material: 4.9 MPa$^{1/2}$) is replaced by polytetramethylene ether glycol (PTMG, $\Delta$HSP value with carbon material: 3.8 MPa$^{1/2}$) was used as Polyether compound-2 ($\Delta$HSP value with carbon material: 4.1 MPa$^{1/2}$).

(Method of producing master pellet of carbon material)

[Production of Carbon-1]

Polyester-2 and Ketjen black (aspect ratio 1.2) were kneaded and extruded using a twin-screw kneader set to raise the temperature stepwise from 230 to 270°C to obtain Carbon-1 that is a master pellet containing 10% by mass of Ketjen black.

[Production of Carbon-2]

Polyester-2 and carbon nanotubes (aspect ratio 250) were kneaded and extruded using a twin-screw kneader set to raise the temperature stepwise from 230 to 270°C to obtain Carbon-2 that is a master pellet containing 10% by mass of carbon nanotubes.

[Production of Carbon-3]

The Polyester-1 and Ketjen black (aspect ratio 1.2) were kneaded and extruded using a twin-screw kneader set to raise the temperature stepwise from 270 to 285°C to obtain Carbon-3 that is a master pellet containing 50% by mass of Ketjen black.

[Production of Carbon-4]

The Polyester-2, carbon nanotubes (aspect ratio 250), and Polyether compound-1 were kneaded and extruded using a twin-screw kneader set to raise the temperature stepwise from 230 to 270°C to obtain Carbon-4 that is a master pellet containing 10% by mass of carbon nanotubes and 1.0% by mass of Polyether compound-1.

[Production of Carbon-5]

The Polyester-3 and carbon nanotubes (aspect ratio 250) were kneaded and extruded using a twin-screw kneader set to raise the temperature stepwise from 230 to 270°C to obtain Carbon-5 that is a master pellet containing 10% by mass of carbon nanotubes.

[Production of Carbon-6]

The Polyester-2, carbon nanotubes (aspect ratio 250), and Polyether compound-1 were kneaded and extruded using a twin-screw kneader set to raise the temperature stepwise from 230 to 270°C to obtain Carbon-6 that is a master pellet containing 10% by mass of carbon nanotube and 2.0% by mass of Polyether compound-1.

[Production of Carbon-7]

Polyester-5 and carbon nanotubes (aspect ratio 250) were kneaded and extruded using a twin-screw kneader set to raise the temperature stepwise from 230 to 270°C to obtain Carbon-7 that is a master pellet containing 10% by mass of carbon nanotubes.

(Example 1)

After drying Polyester-1 at 180°C and Polyester-2 and Carbon-1 at 150°C under reduced pressure for 2 hours and 30 minutes, resins were mixed so that the final content ratio was as shown in the table, and fed to the extruder. After melt-extrusion and filtration through a filter, the film was wound through a T-die onto a cooled casting roll maintained at 50°C using the electrostatic application casting method, cooled, and solidified to obtain a polyester film having a thickness of 300 μm as listed in the table. The characteristics of the films obtained were as shown in the tables.
Metal layers M and M' were formed by vacuum deposition on both surfaces of the obtained polyester film so that the thicknesses of the metal layers were as shown in the tables, thereby obtaining a laminated polyester film having metal layers. A resin current collector for bipolar battery was produced using the metal species shown in the tables. As described above in the section [Evaluation for bipolar battery], a polyester film having metal layers was incorporated into a cell for evaluation of bipolar battery as a resin current collector, and evaluation for bipolar battery was performed.

(Examples 2 to 4)

A polyester film was obtained in the same manner as in Example 1, except that the type and concentration of the carbon material contained and the concentration of Polyester-2 contained were changed as shown in the tables. In Example 3, Carbon-2 was used as the carbon material master pellet for carbon nanotubes. The evaluation results are shown in the tables.

(Example 5)

A polyester film was obtained in the same manner as in Example 1, except that Carbon-3 was used as the master pellet and Polyester-2 was not included as the low melting point polyester component as described in the tables. The evaluation results are shown in the tables.

(Example 6)

A polyester film was obtained in the same manner as in Example 1, except that the discharge quantity from the extruder was adjusted and biaxial stretching film formation was performed according to the stretching conditions described in the tables. Specifically, the film was first guided to a group of stretching rolls heated to 60°C to 120°C in the longitudinal direction, where it was stretched 3.0 times by a stretching operation. The uniaxially stretched film was then guided into a tenter and preheated to 90°C, then stretched 3.5 times in the width direction at a temperature of 100°C to 130°C, and then heat-treated at 230°C under a constant length to apply a relaxation treatment of 4% to obtain a biaxially oriented polyester film having a thickness of 3 $\mu$m. The evaluation results are shown in the tables.

(Examples 7 and 15)

The polyester film was obtained in the same manner as in Example 1, except that the discharge quantity from the extruder was adjusted, and a configuration was prepared in which, in addition to the layer P1 as shown in the table, the layer P2 with the composition and configuration shown in tables was laminated. Here, Polyester-3 was used after being dried under reduced pressure at 180°C for 2.5 hours. Carbon-2 was used to form the layer P1, and Carbon-5 was used to form the layer P2. The evaluation results are shown in the tables.

(Examples 8 to 10)

A polyester film having a thickness of 50 $\mu$m was obtained in the same manner as in Example 6, except that the discharge quantity from the extruder was adjusted, the type and concentration of the carbon material contained and the concentration of Polyester-2 contained were changed as shown in the tables, and stretching ratio was changed as shown in tables. Note that Carbon-1 and Carbon-2 were used. The evaluation results are shown in the tables.

(Example 11)

A polyester film having a thickness of 50 $\mu$m was obtained in the same manner as in Example 6, except that the discharge quantity from the extruder was adjusted, Carbon-1 was used as a carbon material master pellet and Carbon-4 was used as a master pellet containing carbon nanotube and Polyether compound-1 as a dispersant, the type and concentration of the carbon material contained and the concentration of Polyester-2 contained were changed as shown in the tables, and stretching ratio was changed as shown in the tables. In The evaluation results are shown in the tables.

(Examples 12 to 14)

In Examples 12 and 14, a polyester film having a thickness of 300 $\mu$m was obtained in the same manner as in Example 1, except that the type and concentration of the carbon materials contained and the concentrations of Polyester-1, Polyester-2, and Polyester 4 contained were changed as shown in the tables. Note that Carbon-1 and Carbon-2 were used. In Example 13, a polyester film having a thickness of 300 $\mu$m was obtained in the same manner as in Example 1, except that Polyester-4, Polyester-2, and master pellets of carbon material (Carbon-1 and Carbon-2), and Polyether compound-2 were mixed and fed to an extruder such that the type and concentration of the carbon materials contained and the content of Polyether compound-2 were the same as those shown in the tables. The evaluation results are shown in the tables.

(Example 16)

In Example 16, a biaxially stretched polyester film having a thickness of 35 $\mu$m was obtained in the same manner as in Example 6, except that the discharge quantity from the extruder was adjusted, in addition to the layer P1 shown in the tables, the layer P2 with a concentration and configuration shown in the tables was laminated, and biaxially stretching film formation was performed according to the stretching conditions shown in tables. Note that Carbon-1 and Carbon-6 were used to form the layer P1, and Carbon-5 was used to form the layer P2. The evaluation results are shown in the tables.

(Examples 17 and 18)

In Examples 17 and 18, as a resin which is a main component of the layer P2, Polyester-5 with a dicarboxylic acid component having a carbon number of 12, which has a lower $\Delta$HSP value than that of Polyester-1 and a higher $\Delta$HSP value than that of Polyester-4, was used as a main component of the layer P2. The biaxially stretched polyester film having a thickness of 35 $\mu$m was obtained in the same manner as in Example 16, except that two layer configuration of layer P1/layer P2 similar to Example 16 was used in Example 17, and three layer configuration of layer P2/layer P1/layer P2 was used in Example 18. Note that Carbon-1 and Carbon-6 were used to form the layer P1, and Carbon-7 was used to form the layer P2. The evaluation results are shown in the tables.

(Comparative Example 1 and 2)

A polyester film was obtained in the same manner as in Example 1, except that the type and concentration of the carbon material contained and the concentration of Polyester-2 contained and raw materials were changed as shown in the tables. The evaluation results are shown in the tables. Note that Carbon-1 was used in Comparative Example 1, and Carbon-3 were used in Comparative Example 2.

(Comparative Example 3)

The laminated polyester film having a thickness of 800 $\mu$m shown in table was obtained by adjusting the discharge quantity from the extruder, changing type and concentration of the carbon material contained and concentration of Polyester-2 and Polyether compound-1 as shown in tables, merging raw materials for the layer P1 containing carbon material and raw materials for layer P2 without containing carbon material with 249 layers of multi-manifold type feed block for alternate lamination with a lamination ratio of 1.0, thereafter winding the resulting melted alternate laminate on a cooled casting roll maintained at 50°C through a T-die using an electrostatic application casting method followed by cooling and solidification. Note that Carbon-1, Carbon-2, and Carbon 5 were used for the layer P1. The evaluation results are shown in tables.

[Table 1]

[Table 1]

| | Composition of polyester film | | | | | | | |
| --- | --- | --- | --- | --- | --- | --- | --- | --- |
| | Layer P1 (Polyester resin layer containing 1.0% by mass or more and 30% by mass or less of conductive particles) | | | | | | | |
| | Constituent resin | Resin content (parts by mass) | Low-melting point resin component | Content of low-melting point resin component (parts by mass) | Carbon number of diol component of resin as main component | Carbon number of dicarboxylic acid component of resin as main component | Resin component containing ether bond in its main chain | Content of resin component containing ether bond in its main chain (parts by mass) |
| Example 1 | Polyester-1 | 73.0 | Polyester-2 | 25.0 | 2 | 8 | - | - |
| Example 2 | Polyester-1 | 51.0 | Polyester-2 | 45.0 | 2 | 8 | - | - |
| Example 3 | Polyester-1 | 51.0 | Polyester-2 | 45.0 | 2 | 8 | - | - |
| Example 4 | Polyester-1 | 86.5 | Polyester-2 | 12.5 | 2 | 8 | - | - |
| Example 5 | Polyester-1 | 98.0 | - | - | 2 | 8 | - | - |
| Example 6 | Polyester-1 | 73.0 | Polyester-2 | 25.0 | 2 | 8 | - | - |
| Example 7 | Polyester-1 | 51.0 | Polyester-2 | 45.0 | 2 | 8 | - | - |
| Example 8 | Polyester-1 | 62.0 | Polyester-2 | 35.0 | 2 | 8 | - | - |
| Example 9 | Polyester-1 | 62.0 | Polyester-2 | 35.0 | 2 | 8 | - | - |
| Example 10 | Polyester-1 | 62.0 | Polyester-2 | 35.0 | 2 | 8 | - | - |
| Example 11 | Polyester-1 | 61.9 | Polyester-2 | 35.0 | 2 | 8 | Polyether compound-1 | 0.1 |
| Example 12 | Polyester-1 | 62.0 | Polyester-2 | 35.0 | 2 | 8 | - | - |
| Example 13 | Polyester-1 | 52.0 | Polyester-2 | 35.0 | 2 | 8 | Polyether compound-2 | 10 |
| Example 14 | Polyester-4 | 62.0 | Polyester-2 | 35.0 | 8 | 8 | - | - |
| Example 15 | Polyester-1 | 51.0 | Polyester-2 | 45.0 | 2 | 8 | - | - |
| Example 16 | Polyester-1 | 50.6 | Polyester-2 | 45.0 | 2 | 8 | Polyether compound-1 | 0.4 |
| Example 17 | Polyester-1 | 50.6 | Polyester-2 | 45.0 | 2 | 8 | Polyether compound-1 | 0.4 |

(continued)

| | Composition of polyester film | | | | | | | |
| --- | --- | --- | --- | --- | --- | --- | --- | --- |
| | Layer P1 (Polyester resin layer containing 1.0% by mass or more and 30% by mass or less of conductive particles) | | | | | | | |
| | Constituent resin | Resin content (parts by mass) | Low-melting point resin component | Content of low-melting point resin component (parts by mass) | Carbon number of diol component of resin as main component | Carbon number of dicarboxylic acid component of resin as main component | Resin component containing ether bond in its main chain | Content of resin component containing ether bond in its main chain (parts by mass) |
| Example 18 | Polyester-1 | 50.6 | Polyester-2 | 45.0 | 2 | 8 | Polyether compound-1 | 0.4 |
| Comparative Example 1 | Polyester-1 | 93.2 | Polyester-2 | 6.3 | 2 | 8 | - | - |
| Comparative Example 2 | Polyester-1 | 65.0 | - | - | 2 | 8 | - | - |
| Comparative Example 3 | Polyester-1 | 61.9 | Polyester-2 | 35.0 | 2 | 8 | Polyether compound-1 | 0.1 |

[Table 2]

| Composition of polyester film | | | | |
|---|---|---|---|---|
| Layer P1 (Polyester resin layer containing 1.0% by mass or more and 30% by mass or less of conductive particles) | | | | |
| | Type of carbon material (i) | Content concentration of carbon material (i) (parts by mass) | Type of carbon material (ii) | Content concentration of carbon material (ii) (parts by mass) |
| Example 1 | Ketjen black | 2.0 | - | - |
| Example 2 | Ketjen black | 4.0 | - | - |
| Example 3 | Carbon nanotube | 4.0 | - | - |
| Example 4 | Ketjen black | 1.0 | - | - |
| Example 5 | Ketjen black | 2.0 | - | - |
| Example 6 | Ketjen black | 2.0 | - | - |
| Example 7 | Carbon nanotube | 4.0 | - | - |
| Example 8 | Ketjen black | 1.0 | Carbon nanotube | 2.0 |
| Example 9 | Ketjen black | 1.5 | Carbon nanotube | 1.5 |
| Example 10 | Ketjen black | 2.0 | Carbon nanotube | 1.0 |
| Example 11 | Ketjen black | 2.0 | Carbon nanotube | 1.0 |
| Example 12 | Ketjen black | 2.0 | Carbon nanotube | 1.0 |
| Example 13 | Ketjen black | 2.0 | Carbon nanotube | 1.0 |
| Example 14 | Ketjen black | 2.0 | Carbon nanotube | 1.0 |
| Example 15 | Carbon nanotube | 4.0 | - | - |
| Example 16 | Ketjen black | 2.0 | Carbon nanotube | 2.0 |
| Example 17 | Ketjen black | 2.0 | Carbon nanotube | 2.0 |
| Example 18 | Ketjen black | 2.0 | Carbon nanotube | 2.0 |
| Comparative Example 1 | Ketjen black | 0.5 | - | - |
| Comparative Example 2 | Ketjen black | 35 | - | - |
| Comparative Example 3 | Ketjen black | 1.5 | Carbon nanotube | 1.5 |

[Table 3]

[Table 3]

| | Composition of polyester film | | | | | |
|---|---|---|---|---|---|---|
| | Layer P2 (Resin layer with carbon material content lower than that in layer P1) | | | | | |
| | Constituent resin | Resin content (parts by mass) | Carbon number of diol component of resin as main component | Carbon number of dicarboxylic acid component of resin as main component | Type of carbon material | Content concentration of carbon material (parts by mass) |
| Example 1 | - | - | - | - | - | - |
| Example 2 | - | - | - | - | - | - |
| Example 3 | - | - | - | - | - | - |
| Example 4 | - | - | - | - | - | - |

(continued)

| | Composition of polyester film | | | | | |
|---|---|---|---|---|---|---|
| | Layer P2 (Resin layer with carbon material content lower than that in layer P1) | | | | | |
| | Constituent resin | Resin content (parts by mass) | Carbon number of diol component of resin as main component | Carbon number of dicarboxylic acid component of resin as main component | Type of carbon material | Content concentration of carbon material (parts by mass) |
| Example 5 | - | - | - | - | - | - |
| Example 6 | - | - | - | - | - | - |
| Example 7 | Polyester-3 | 99.3 | 8 | - | Carbon nanotube | 0.7 |
| Example 8 | - | - | - | - | - | - |
| Example 9 | - | - | - | - | - | - |
| Example 10 | - | - | - | - | - | - |
| Example 11 | - | - | - | - | - | - |
| Example 12 | - | - | - | - | - | - |
| Example 13 | - | - | - | - | - | - |
| Example 14 | - | - | - | - | - | - |
| Example 15 | Polyester-3 | 99.3 | 8 | 8 | Carbon nanotube | 0.7 |
| Example 16 | Polyester-3 | 98.5 | 8 | 8 | Carbon nanotube | 1.5 |
| Example 17 | Polyester-5 | 98.5 | 2 | 12 | Carbon nanotube | 1.5 |
| Example 18 | Polyester-5 | 98.5 | 2 | 12 | Carbon nanotube | 1.5 |
| Comparative Example 1 | - | - | - | - | - | - |
| Comparative Example 2 | - | - | - | - | - | - |
| Comparative Example 3 | Polyester-1 | 100 | 2 | 8 | - | - |

[Table 4-1]

[Table 4-1]

| | Stretching in longitudinal direction | Stretching in width direction | Lamination configuration | Thickness of polyester film (μm) | | |
|---|---|---|---|---|---|---|
| | Stretching ratio (times) | Stretching ratio (times) | | Entire layer (μm) | Layer P1 $T_{P1}$ (μm) | Layer P2 $T_{P2}$ (μm) |
| Example 1 | 1.0 | 1.0 | Monolayer | 300 | 300 | - |
| Example 2 | 1.0 | 1.0 | Monolayer | 300 | 300 | - |

(continued)

| | Stretching in longitudinal direction | Stretching in width direction | Lamination configuration | Thickness of polyester film (μm) | | |
|---|---|---|---|---|---|---|
| | Stretching ratio (times) | Stretching ratio (times) | | Entire layer (μm) | Layer P1 $T_{P1}$ (μm) | Layer P2 $T_{P2}$ (μm) |
| Example 3 | 1.0 | 1.0 | Monolayer | 300 | 300 | - |
| Example 4 | 1.0 | 1.0 | Monolayer | 300 | 300 | - |
| Example 5 | 1.0 | 1.0 | Monolayer | 300 | 300 | - |
| Example 6 | 3.0 | 3.5 | Monolayer | 3 | 3 | - |
| Example 7 | 1.0 | 1.0 | Two-layer (Layer P1/Layer P2) | 150 | 140 | 10 |
| Example 8 | 2.5 | 2.5 | Monolayer | 50 | 50 | - |
| Example 9 | 2.5 | 2.5 | Monolayer | 50 | 50 | - |
| Example 10 | 2.5 | 2.5 | Monolayer | 50 | 50 | - |

[Table 4-2]

[Table 4-2]

| | Stretching in longitudinal direction | Stretching in width direction | Laminate configuration | Thickness of polyester film (μm) | | |
|---|---|---|---|---|---|---|
| | Stretching ratio (times) | Stretching ratio (times) | | Entire layer (μm) | Layer P1 $T_{P1}$ (μm) | Layer P2 $T_{P2}$ (μm) |
| Example 11 | 2.5 | 2.5 | Monolayer | 50 | 50 | - |
| Example 12 | 1.0 | 1.0 | Monolayer | 300 | 300 | - |
| Example 13 | 1.0 | 1.0 | Monolayer | 300 | 300 | - |
| Example 14 | 1.0 | 1.0 | Monolayer | 300 | 300 | - |
| Example 15 | 1.0 | 1.0 | Three-layer (Layer P2/Layer P1 /Layer P2) | 150 | 140 | 5 |
| Example 16 | 3.5 | 3.5 | Two-layer (Layer P1/Layer P2) | 35 | 29 | 6 |
| Example 17 | 3.5 | 3.5 | Two-layer (Layer P1/Layer P2) | 35 | 29 | 6 |
| Example 18 | 3.5 | 3.5 | Three-layer (Layer P2/Layer P1 /Layer P2) | 35 | 29 | 3 |
| Comparative Example 1 | 1.0 | 1.0 | Monolayer | 300 | 300 | - |
| Comparative Example 2 | 1.0 | 1.0 | Monolayer | 300 | 300 | - |
| Comparative Example 3 | 1.0 | 1.0 | 249 layers of alternately laminated Layer P1/ Layer P2 (Layer P2/Layer P1 /Layer P2/···/Layer P1 /Layer P2) | 800 | Each layer 3.2 | Each layer 3.2 |

[Table 5-1]

[Table 5-1

| | Film properties | | | | | |
|---|---|---|---|---|---|---|
| | Intrinsic viscosity IV$_F$ (dl/g) | Melting point (°C) | Layer P1 carbon material dispersion | | | |
| | | | Volume-based average particle size (μm) | Number of dispersed particles (particles/μm$^2$) | Aspect ratio | Area (SC1) occupied by carbon material C1 /Area (SC2) occupied by carbon material C2 |
| Example 1 | 0.65 | 230 / 255 | 0.18 | 3.4 | 1.3 | - |
| Example 2 | 0.65 | 203 / 255 | 0.21 | 4.0 | 1.3 | - |
| Example 3 | 0.65 | 203 / 255 | 0.23 | 4.2 | 220 | - |
| Example 4 | 0.65 | 235 / 255 | 0.16 | 1.8 | 1.3 | - |
| Example 5 | 0.65 | 255 | 0.17 | 2.5 | 1.3 | - |
| Example 6 | 0.65 | 230/255 | 0.25 | 1.3 | 1.3 | - |
| Example 7 | 0.72 | 210 / 255 / 280 | 0.18 | 3.4 | 220 | - |
| Example 8 | 0.69 | 203 / 255 | 0.17 | 3.0 | 1.3/120 | 0.5 |
| Example 9 | 0.69 | 203 / 255 | 0.19 | 3.2 | 1.3/120 | 1.0 |

[Table 5-2]

[Table 5-2]

| | Film properties | | | | | |
|---|---|---|---|---|---|---|
| | Intrinsic viscosity IV$_F$ (dl/g) | Melting point (°C) | Layer P1 carbon material dispersion | | | |
| | | | Volume-based average particle size (μm) | Number of dispersed particles (particles/μm$^2$) | Aspect ratio | Area (SC1) occupied by carbon material C1 /Area (SC2) occupied by carbon material C2 |
| Example 10 | 0.69 | 203 / 255 | 0.16 | 1.7 | 1.3/120 | 2.0 |
| Example 11 | 0.69 | 203 / 255 | 0.18 | 2.8 | 1.3/120 | 2.0 |
| Example 12 | 0.69 | 203 / 255 | 0.21 | 3.8 | 1.3/120 | 2.0 |

(continued)

| | Film properties | | | | | |
|---|---|---|---|---|---|---|
| | | | Layer P1 carbon material dispersion | | | |
| | Intrinsic viscosity $IV_F$ (dl/g) | Melting point (°C) | Volume-based average particle size (μm) | Number of dispersed particles (particles/μm²) | Aspect ratio | Area (SC1) occupied by carbon material C1 /Area (SC2) occupied by carbon material C2 |
| Example 13 | 0.69 | 203 / 250 | 0.21 | 3.9 | 1.3/120 | 2.0 |
| Example 14 | 0.75 | 203 / 275 | 0.21 | 4.0 | 1.3/120 | 2.0 |
| Example 15 | 0.72 | 210 / 255 / 280 | 0.18 | 3.4 | 220 | - |
| Example 16 | 0.72 | 210 / 255 / 280 | 0.19 | 3.3 | 1.3/120 | 1.0 |
| Example 17 | 0.72 | 210 / 255 / 265 | 0.18 | 3.2 | 1.3/120 | 1.0 |
| Example 18 | 0.72 | 210 / 255 / 265 | 0.18 | 3.2 | 1.3/120 | 1.0 |
| Comparative Example 1 | 0.65 | 255 | 0.08 | 1.1 | 1.3 | - |
| Comparative Example 2 | 0.65 | 255 | 0.95 | 1.3 | 1.3 | - |
| Comparative Example 3 | 0.69 | 203 / 255 | 0.19 | 3.2 | 1.3/120 | 1.0 |

[Table 6-1]

[Table 6-1]

| | Film properties | | | | | |
|---|---|---|---|---|---|---|
| | Electrical conductivity | | Mechanical strength in longitudinal direction | | Mechanical strength in width direction | |
| | Volume resistivity (Qcm) | In-plane variation of volume resistivity (%) | Elongation at break (%) | Breaking strength (MPa) | Elongation at break (%) | Breaking strength (MPa) |
| Example 1 | $1.0 \times 10^4$ | 100 | 5 | 30 | 5 | 30 |
| Example 2 | $1.0 \times 10^1$ | 100 | 5 | 25 | 5 | 25 |
| Example 3 | $1.0 \times 10^0$ | 100 | 5 | 20 | 5 | 20 |
| Example 4 | $2.0 \times 10^7$ | 100 | 10 | 45 | 10 | 45 |
| Example 5 | $1.0 \times 10^6$ | 350 | 5 | 25 | 5 | 25 |
| Example 6 | $8.0 \times 10^7$ | 80 | 80 | 100 | 80 | 100 |

(continued)

| | Film properties | | | | | |
|---|---|---|---|---|---|---|
| | Electrical conductivity | | Mechanical strength in longitudinal direction | | Mechanical strength in width direction | |
| | Volume resistivity (Qcm) | In-plane variation of volume resistivity (%) | Elongation at break (%) | Breaking strength (MPa) | Elongation at break (%) | Breaking strength (MPa) |
| Example 7 | $1.0 \times 10^4$ | 100 | 6 | 30 | 6 | 30 |
| Example 8 | $5.0 \times 10^4$ | 80 | 30 | 80 | 30 | 80 |
| Example 9 | $1.0 \times 10^4$ | 80 | 35 | 75 | 35 | 75 |

[Table 6-2]

[Table 6-2]

| | Film properties | | | | | |
|---|---|---|---|---|---|---|
| | Electrical conductivity | | Mechanical strength in longitudinal direction | | Mechanical strength in width direction | |
| | Volume resistivity ($\Omega$cm) | In-plane variation of volume resistivity (%) | Elongation at break (%) | Breaking strength (MPa) | Elongation at break (%) | Breaking strength (MPa) |
| Example 10 | $8.0 \times 10^6$ | 80 | 45 | 75 | 45 | 75 |
| Example 11 | $7.0 \times 10^4$ | 80 | 75 | 80 | 75 | 80 |
| Example 12 | $1.0 \times 10^2$ | 100 | 5 | 25 | 5 | 25 |
| Example 13 | $2.5 \times 10^1$ | 100 | 7 | 30 | 7 | 30 |
| Example 14 | $1.5 \times 10^1$ | 100 | 8 | 50 | 8 | 50 |
| Example 15 | $1.0 \times 10^4$ | 100 | 6 | 30 | 6 | 30 |
| Example 16 | $1.3 \times 10^4$ | 80 | 90 | 130 | 90 | 130 |
| Example 17 | $5.5 \times 10^4$ | 80 | 95 | 120 | 95 | 120 |
| Example 18 | $5.2 \times 10^4$ | 80 | 95 | 120 | 95 | 120 |
| Comparative Example 1 | $1.0 \times 10^{10}$ | 600 | 10 | 55 | 10 | 55 |
| Comparative Example 2 | $1.0 \times 10^{-1}$ | 100 | 3 | 15 | 3 | 15 |
| Comparative Example 3 | $1.0 \times 10^{16}$ | 520 | 10 | 50 | 8 | 50 |

[Table 7-1]

[Table 7-1]

| | | Configuration of resin current collector for bipolar battery | | | | | | | | Penetration resistivity (Qcm) |
| | | Layer composed of metal and/or metal-based compound (Layer M, Layer M') | | | | | | | | |
| | Layer M lamination method | Laminate configuration | Layer M | | | Layer M' | | | |
| | | | Constituent metal species | Thickness $T_M$ ($\mu$m) | Adhesive strength to substrate (N/15mm) | Constituent metal species | Thickness $T_{M'}$ ($\mu$m) | Adhesive strength to substrate (N/15mm) | |
| Example 1 | Vacuum deposition | Layer M/Layer P1/Layer M' | Aluminum | 1 | 3.5 | Copper | 1 | 8.0 | $1.4\times10^5$ |
| Example 2 | Vacuum deposition | Layer M/Layer P1/Layer M' | Aluminum | 1 | 2.5 | Copper | 1 | 2.5 | $4.7\times10^3$ |
| Example 3 | Vacuum deposition | Layer M/Layer P1/Layer M' | Aluminum | 1 | 2.5 | Copper | 1 | 2.5 | $3.2\times10^2$ |
| Example 4 | Vacuum deposition | Layer M/Layer P1/Layer M' | Aluminum | 1 | 8.0 | Copper | 1 | 8.0 | $2.3\times10^9$ |
| Example 5 | Vacuum deposition | Layer M/Layer P1/Layer M' | Aluminum | 1 | 4.0 | Copper | 1 | 4.0 | $1.3\times10^8$ |
| Example 6 | Vacuum deposition | Layer M/Layer P1/Layer M' | Aluminum | 1 | 4.0 | Copper | 1 | 4.0 | $9.6\times10^9$ |
| Example 7 | Vacuum deposition | Layer M/Layer P1/Layer P2 /Layer M' | Aluminum | 1 | 3.5 | Copper | 1 | 3.5 | $1.3\times10^6$ |
| Example 8 | Vacuum deposition | Layer M/Layer P1/Layer M' | Aluminum | 1 | 3.5 | Copper | 1 | 3.5 | $6.2\times10^6$ |
| Example 9 | Vacuum deposition | Layer M/Layer P1/Layer M' | Aluminum | 1 | 3.0 | Copper | 1 | 4.0 | $1.4\times10^6$ |

[Table 7-2]

[Table 7-2]

| | | | Configuration of resin current collector for bipolar battery | | | | | | |
|---|---|---|---|---|---|---|---|---|---|
| | | | Layer composed of metal and/or metal-based compound (Layer M, Layer M') | | | | | | Penetration resistivity (Qcm) |
| | Layer M lamination method | Laminate configuration | Layer M | | | Layer M' | | | |
| | | | Constituent metal species | Thickness $T_M$ ($\mu$m) | Adhesive strength to substrate (N/15mm) | Constituent metal species | Thickness $T_{M'}$ ($\mu$m) | Adhesion strength to substrate (N/15mm) | |
| Example 10 | Vacuum deposition | Layer M/Layer P1/Layer M' | Aluminum | 1 | 2.5 | Copper | 1 | 4.0 | $9.2 \times 10^8$ |
| Example 11 | Vacuum deposition | Layer M/Layer P1/Layer M' | Aluminum | 1 | 3.5 | Copper | 1 | 4.5 | $8.0 \times 10^6$ |
| Example 12 | Vacuum deposition | Layer M/Layer P1/Layer M' | Aluminum | 1 | 5.5 | Copper | 1 | 7.0 | $4.0 \times 10^4$ |
| Example 13 | Vacuum deposition | Layer M/Layer P1/Layer M' | Aluminum | 1 | 4.0 | Copper | 1 | 4.0 | $8.5 \times 10^3$ |
| Example 14 | Vacuum deposition | Layer M/Layer P1/Layer M' | Aluminum | 1 | 4.0 | Copper | 1 | 4.0 | $6.5 \times 10^3$ |
| Example 15 | Vacuum deposition | Layer M/Layer P2/Layer P1 /Layer P2/Layer M' | Aluminum | 1 | 3.5 | Copper | 1 | 3.5 | $1.3 \times 10^6$ |
| Example 16 | Vacuum deposition | Layer M/Layer P1/Layer P2 /Layer M' | Aluminum | 1 | 4.0 | Copper | 1 | 4.0 | $2.1 \times 10^6$ |

| Example 17 | Vacuum deposition | Layer M/Layer P1/Layer P2 /Layer M' | Aluminum | 1 | 5.0 | Copper | 1 | 5.0 | $7.2\times10^6$ |
| Example 18 | Vacuum deposition | Layer M/Layer P2/Layer P1 /Layer P2/Layer M' | Aluminum | 1 | 5.0 | Copper | 1 | 5.0 | $6.8\times10^6$ |
| Comparative Example 1 | Vacuum deposition | Layer M/Layer P1/Layer M' | Aluminum | 1 | 7.0 | Copper | 1 | 7.0 | $>10^{10}$ |
| Comparative Example 2 | Vacuum deposition | Layer M/Layer P1/Layer M' | Aluminum | 1 | 0.3 | Copper | 1 | 0.3 | $4.0\times10^1$ |
| Comparative Example 3 | Vacuum deposition | Layer M/(Layer P1/Layer P2 alternating layer)/Layer M' | Aluminum | 1 | 1.8 | Copper | 1 | 1.8 | $>10^{10}$ |

[Table 8]

[Table 8]

| | Production aptitude | | Evaluation of electrical properties | Evaluation of processability | |
| --- | --- | --- | --- | --- | --- |
| | Extrusion stability | Film formability | Electrical conductivity | Electrical conductivity after stretching | Electrical conductivity after bending |
| Example 1 | A | A | A | B | B |
| Example 2 | B | A | AA | B | B |
| Example 3 | B | A | AA | B | B |
| Example 4 | A | A | C | C | B |
| Example 5 | A | A | B | B | B |
| Example 6 | A | C | C | C | A |
| Example 7 | A | A | A | B | B |
| Example 8 | A | B | A | A | A |
| Example 9 | A | A | A | A | A |
| Example 10 | A | A | B | A | A |
| Example 11 | A | A | A | A | A |
| Example 12 | A | A | A | A | B |
| Example 13 | A | A | AA | A | B |
| Example 14 | A | A | AA | A | B |
| Example 15 | A | A | A | B | B |
| Example 16 | A | A | A | AA | AA |
| Example 17 | A | A | A | AA | AA |
| Example 18 | A | A | A | AA | AA |
| Comparative Example 1 | A | A | D | D | D |
| Comparative Example 2 | D | D | AA | D | D |

(continued)

| | Production aptitude | | Evaluation of electrical properties | Evaluation of processability | |
|---|---|---|---|---|---|
| | Extrusion stability | Film formability | Electrical conductivity | Electrical conductivity after stretching | Electrical conductivity after bending |
| Comparative Example 3 | A | A | D | D | D |

[Table 9]

[Table 9]

| | Bipolar battery properties | | | | |
|---|---|---|---|---|---|
| | Current value stability | Variation in battery properties | High temperature stability of battery | Durability against thermal deformation of battery | Durability against impact of battery |
| Example 1 | A | A | B | C | C |
| Example 2 | AA | A | B | C | C |
| Example 3 | AA | A | B | C | C |
| Example 4 | C | A | C | C | C |
| Example 5 | B | C | B | C | C |
| Example 6 | C | AA | C | A | A |
| Example 7 | A | A | B | C | C |
| Example 8 | A | AA | A | B | A |
| Example 9 | A | AA | A | B | B |
| Example 10 | B | AA | A | A | B |
| Example 11 | A | AA | A | A | A |
| Example 12 | A | A | A | C | C |
| Example 13 | AA | A | A | C | C |
| Example 14 | AA | A | A | C | C |
| Example 15 | A | A | B | C | C |
| Example 16 | A | AA | A | AA | AA |
| Example 17 | A | AA | A | AA | AA |
| Example 18 | A | AA | A | AA | AA |
| Comparative Example 1 | D | D | D | C | C |
| Comparative Example 2 | AA | D | D | D | D |
| Comparative Example 3 | D | D | D | C | C |

## Claims

1. A polyester film satisfying the following (1) to (3):

(1) a volume resistivity at 23°C and 65% RH is $1.0 \times 10^0$ Ωcm or more and less than $1.0 \times 10^8$ Ωcm;

(2) a film thickness is 1 μm or more and less than 500 μm; and

(3) the polyester film comprises a polyester resin layer (layer P1) containing 1.0% by mass or more and 30% by mass or less of conductive particles, and the conductive particles are carbon materials.

2. A polyester film satisfying the following (1') to (3'):

(1') a film thickness is 1 μm or more and less than 500 μm;

(2') the polyester film comprises a polyester resin layer (layer P1) containing 1.0% by mass or more and 30% by mass or less of conductive particles; and

(3') the layer P1 comprises conductive particles C1' having an aspect ratio of 1 or more and less than 5 and conductive particles C2' having an aspect ratio of 5 or more.

3. The polyester film according to claim 2, wherein the layer P1 satisfies the following (4) to (6):

(4) the conductive particles contained in the layer P1 are carbon materials;

(5) the layer P1 comprises 0.01% by mass or more and 10% by mass or less of a compound having an ether bond in its main chain; and

(6) the layer P1 comprises two or more polyester resins having different melting points.

4. The polyester film according to claim 3, satisfying the following (7): (7) the layer P1 is at least one of the outermost layers of the polyester film, and the layer P1 consists of a layer comprising as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

5. The polyester film according to claim 1 or 2, wherein the conductive particles are carbon materials, a volume-based average dispersed particle size of the carbon materials contained in the polyester film is 0.15 μm or more and 0.90 μm or less, and the number of the dispersed particles is 1.5 particles/μm$^2$ or more and 5.0 particles/μm$^2$ or less.

6. The polyester film according to claim 1 or 2, wherein the conductive particles are carbon materials, and 100% by mass of the carbon materials contain one or more selected from Ketjen black, carbon nanotubes, and acetylene black in a total amount of 80% by mass or more.

7. The polyester film according to claim 1 or 2, wherein the layer P1 comprises at least two types of conductive particles that are conductive particles C1' having an aspect ratio of 1 or more and less than 5 and conductive particles C2' having an aspect ratio of 5 or more, and a ratio of an area (SC1') occupied by the conductive particles C1' to an area (SC2') occupied by the conductive particles C2' in the layer P1 is 0.5 times or more and 5 times or less, as determined by the following methods:

<Method of measuring area occupied by each conductive particle>
A cross-sectional image (dimension in image: 18.5 μm in length × 25 μm in width) observed at a magnification of 5,000 times using a scanning electron microscope (JSM-6700 manufactured by JEOL Ltd.) is analyzed as follows using an image analysis software (Image-Pro Plus Version 4.0 for "Windows" (registered trademark) created by Planetron Corporation)

(i) Image analysis conditions

After the cross-sectional image is captured using the software, 8-bit grayscale processing is performed by executing the 'Gray Scale 8' command under the 'Convert' menu. Then, at the 'Spatial Calibration' command under the 'Calibration' menu, the width of the captured image is set to 25 μm. Thereafter, the binarization processing is performed using the 'Binarization' command under the 'Process' menu.
(Binarization Processing Condition)

• '3 × 3' is selected
• Threshold setting: The automatic detection button to the right of the numerical entry field is pressed once, and the resulting value is used.
• Preview conditions: The background is displayed as white, and the detected particles are displayed as black.

After the binarization processing, 'Count/Size' command screen under the 'Measure' menu is opened to set the following particle detection conditions and particle analysis conditions, and 'Count' is executed to analyze the detected particles.
(Particle Detection Conditions)

• Intensity Range Selection: 'Automatic Dark Objects' is selected.
• 'Measure Objects' is checked for selection.

(Object Extraction Option)

• 4-Connect/8-Connect: 4-Connect is selected
• Only 'Pre-Filter' and 'Fill holes' are checked for selection
• Smoothing: 0
• Clean Borders: 'All Borders' is selected.

(Particle Analysis Conditions)
An aspect ratio and area of each conductive particle are determined in an image obtained using an aspect ratio (Aspect value) and area (Area value) in the 'Count/Size' command screen from the obtained image.
For five different visual fields, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the conductive particles (conductive particles C1') existing in the region where the aspect ratio is 1 or more and less than 5. When a plurality of local maximum values exist in the region where the aspect ratio is 1 or more and less than 5, the weighted average value using the vertical axis values shall be the aspect ratio of the conductive particles (conductive particles C1') existing in the region where the aspect ratio is 1 or more and less than 5.
Similarly, when a local maximum value exists in the region where the aspect ratio is 5 or more, the local maximum value shall be the aspect ratio of the conductive particles (conductive particles C2') existing in the region where the aspect ratio is 5 or more. When a plurality of local maximum values exist in the region where the aspect ratio is 5 or more, the weighted average value using the vertical axis values shall be the aspect ratio of the conductive particles (conductive particles C2') existing in the region where the aspect ratio is 5 or more.
For each of the five different fields of view, the aspect ratios of the conductive particles (conductive particles C1') existing in the region where the aspect ratio is 1 or more and less than 5 and the conductive particles (conductive particles C2') existing in the region where the aspect ratio is 5 or more are determined, and average values of the five fields of view in the regions shall be the aspect ratios of the conductive particles C1' and the conductive particles C2', respectively, in the polyester film.
The sum of the area (SC1') of the conductive particles (conductive particles C1') existing in the region where the aspect ratio is 1 or more and less than 5 as confirmed by the count histogram described above is determined. Subsequently, the sum of the area (SC2') of the conductive particles (conductive particles C2') existing in the region where the aspect ratio is 5 or more is determined, and the value obtained by dividing the SC1' by the SC2' is considered as the ratio of the area (SC1') occupied by the conductive particles C1' to the area (SC2') occupied by the conductive particles C2' in the layer P1 included in the sample.

8. The polyester film according to claim 1 or 2, wherein the layer P1 comprises at least two types of carbon materials that are carbon material C1 having an aspect ratio of 1 or more and less than 5 and carbon material C2 having an aspect ratio of 5 or more, and a ratio of an area (SC1') occupied by the carbon material C1 to an area (SC2') occupied by the carbon material C2 in the layer P1 is 0.5 times or more and 5 times or less, as determined by the following methods:

<Method of measuring area occupied by each conductive particle>
A cross-sectional image (dimension in image: 18.5 $\mu$m in length $\times$ 25 $\mu$m in width) observed at a magnification of 5,000 times using a scanning electron microscope (JSM-6700 manufactured by JEOL Ltd.) is analyzed as follows using an image analysis software (Image-Pro Plus Version 4.0 for "Windows" (registered trademark) created by Planetron Corporation)

(i) Image analysis conditions

After the cross-sectional image is captured using the software, 8-bit grayscale processing is performed by executing the 'Gray Scale 8' command under the 'Convert' menu. Then, at the 'Spatial Calibration' command under the 'Calibration' menu, the width of the captured image is set to 25 μm. Thereafter, the binarization processing is performed using the 'Binarization' command under the 'Process' menu.
(Binarization Processing Condition)

• '3 × 3' is selected
• Threshold setting: The automatic detection button to the right of the numerical entry field is pressed once, and the resulting value is used.
• Preview conditions: The background is displayed as white, and the detected particles are displayed as black.

After the binarization processing, 'Count/Size' command screen under the 'Measure' menu is opened to set the following particle detection conditions and particle analysis conditions, and 'Count' is executed to analyze the detected particles.
(Particle Detection Conditions)

• Intensity Range Selection: 'Automatic Dark Objects' is selected.
• 'Measure Objects' is checked for selection.

(Object Extraction Option)

• 4-Connect/8-Connect: 4-Connect is selected
• Only 'Pre-Filter' and 'Fill holes' are checked for selection
• Smoothing: 0
• Clean Borders: 'All Borders' is selected.

(Particle Analysis Conditions)
An aspect ratio and area of each conductive particle are determined in an image obtained using an aspect ratio (Aspect value) and area (Area value) in the 'Count/Size' command screen from the obtained image.
For five different visual fields, a count histogram is constructed by plotting the aspect ratios obtained on the horizontal axis, where the width of each interval is 0.5 in the range of 1 or more and 10 or less, and 10 in the range of 10 or more. When a local maximum value exists in a region where the aspect ratio is 1 or more and less than 5 in the count histogram, the minimum value of the interval showing the local maximum value (for example, when a local maximum value is in the interval of 2 or more and 2.5 or less, 2 is adopted as the local maximum value) shall be the aspect ratio of the carbon material (carbon material C1) existing in the region where the aspect ratio is 1 or more and less than 5. When a plurality of local maximum values exist in the region where the aspect ratio is 1 or more and less than 5, the weighted average value using the vertical axis values shall be the aspect ratio of the carbon material (carbon material C1) existing in the region where the aspect ratio is 1 or more and less than 5. Similarly, when a local maximum value exists in the region where the aspect ratio is 5 or more, the local maximum value shall be the aspect ratio of the carbon material (carbon material C2) existing in the region where the aspect ratio is 5 or more.

When a plurality of local maximum values exist in the region where the aspect ratio is 5 or more, the weighted average value using the vertical axis values shall be the aspect ratio of the carbon material (carbon material C2) existing in the region where the aspect ratio is 5 or more.
For each of the five different fields of view, the aspect ratios of the carbon material (carbon material C1) existing in the region where the aspect ratio is 1 or more and less than 5 and the carbon material (carbon material C2) existing in the region where the aspect ratio is 5 or more are determined, and average values of the five fields of view in the regions shall be the aspect ratios of the carbon material C1 and the carbon material C2, respectively, in the polyester film.
The sum of the area (SC1) of the carbon material (carbon material C1) existing in the region where the aspect ratio is 1 or more and less than 5 as confirmed by the count histogram described above is determined. Subsequently, the sum of the area (SC2) of the carbon material (carbon material C2) existing in the region where the aspect ratio is 5 or more is determined, and the value obtained by dividing the SC 1 by the SC2 is considered as the ratio of the area (SC1) occupied by the carbon material C1 to the area (SC2) occupied by the carbon material C2 in the layer P1 included in the sample.

9. The polyester film according to claim 1 or 2, wherein the layer P1 comprises at least two polyester resins having different melting points.

10. The polyester film according to claim 1 or 2, wherein the layer P1 includes as a main component a polyester resin (resin α) containing a dicarboxylic acid component and a diol component with a carbon number of 3 or more and 16 or less or a polyester resin (resin β) containing a diol component and a dicarboxylic acid component with a carbon number of 9 or more and 16 or less.

11. The polyester film according to claim 1 or 2, wherein the conductive particles are carbon materials, a polyester resin layer (layer P2) with a carbon material content lower than that in the layer P1 is provided on at least one side of the layer P1 as the outermost layer of the polyester film, and the following relation is satisfied:

$$M_{P1} - M_{P2} \geq 0.1$$

where $M_{P1}$ (% by mass) is a carbon material content in the layer P1, and $M_{P2}$ (% by mass) is a carbon material content in the layer P2.

12. The polyester film according to claim 11, wherein the layer P2 includes as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

13. The polyester film according to claim 1 or 2, wherein the layer P1 comprises 0.01 % by mass or more and 10 % by mass or less of the compound having an ether bond in its main chain.

14. The polyester film according to claim 1 or 2, wherein the polyester film is uniaxially oriented or biaxially oriented.

15. The polyester film according to claim 1 or 2, wherein the breaking strength of the film in at least one of the in-plane longitudinal direction and the in-plane width direction is 60 MPa or more and 300 MPa or less.

16. A laminated polyester film comprising at least a layer composed of a metal and/or metal-based compound, the polyester film according to claim 1, and a layer composed of a metal and/or metal-based compound in this order.

17. A polyester film satisfying the following (8):
(8) A laminated polyester film comprises at least a layer composed of a metal and/or metal-based compound, the polyester film according to claim 4, and a layer composed of a metal and/or metal-based compound in this order, wherein the outermost layers on both sides of the polyester film are the layers P1, and the layer composed of the metal and/or metal-based compound is provided on each of the surfaces on both sides of the layer P1.

18. The polyester film according to claim 16 or 17, wherein the layer composed of the metal and/or metal-based compound on the surface on one side contains aluminum element, and the layer composed of the metal and/or metal-based compound on the surface on the opposite side contains copper element.

19. The polyester film according to claim 18, wherein the layer composed of the metal and/or metal-based compound containing copper element is in contact with the layer including as a main component a polyester resin (resin α) containing a dicarboxylic acid component and a diol component with the carbon number of 3 or more and 16 or less or a polyester resin (resin β) containing a diol component and a dicarboxylic acid component with the carbon number of 9 or more and 16 or less.

20. A laminated polyester film comprising a layer composed of a metal and/or metal-based compound on each of the surfaces on both sides of the polyester film according to claim 1 or 2, wherein the adhesion strength between the surface of the polyester film and a layer composed of the metal and/or metal-based compound is 2 N/15 mm or more on both sides.

21. A laminated polyester film comprising a layer composed of a metal and/or metal-based compound on surfaces on both sides of the polyester film according to claim 1 or 2, and having a volume resistivity in the penetration direction of the laminated polyester film of $1.0 \times 10^0$ Ωcm or more and $1.0 \times 10^7$ Ωcm or less.

22. A resin current collector composed of the polyester film according to claim 1 or 2.

23. A resin current collector for bipolar battery, composed of the polyester film according to claim 1 or 2.

24. An electrode for bipolar battery, comprising a resin current collector for bipolar battery composed of the polyester film according to claim 1 or 2,

    wherein the resin current collector for bipolar battery comprises as at least a surface layer on one side of the polyester film a surface layer including as a main component a polyester resin (resin α) containing a dicarboxylic acid component and a diol component with a carbon number of 3 or more and 16 or less or a polyester resin (resin β) containing a diol component and a dicarboxylic acid component with a carbon number of 9 or more and 16 or less, and

    wherein the electrode for bipolar battery comprises a negative-electrode active material layer on the surface layer side of the resin current collector for bipolar battery, and a positive-electrode active material layer on the side opposite to the surface layer.

25. A power storage device comprising the resin current collector for bipolar battery according to claim 23.

26. A power storage device comprising at least two of the electrodes for bipolar battery according to claim 24,

    wherein the power storage device has a configuration in which at least the resin current collector for bipolar battery, a positive-electrode active material layer, an electrolyte layer, a negative-electrode active material layer, and the resin current collector for bipolar battery are repeatedly laminated in this order,

    wherein the resin current collector for bipolar battery comprises as at least a surface layer on one side of the polyester film, a surface layer including as a main component a polyester resin (resin α) containing a dicarboxylic acid component and a diol component with a carbon number of 3 or more and 16 or less or a polyester resin (resin β) containing a diol component and a dicarboxylic acid component with a carbon number of 9 or more and 16 or less, and

    wherein the power storage device comprises a negative-electrode active material layer on the surface layer side.

27. A secondary battery comprising the power storage device according to claim 25.

28. An electric vehicle comprising the secondary battery according to claim 27.

29. An electric flying object comprising the secondary battery according to claim 27.

## INTERNATIONAL SEARCH REPORT

| | International application No. |
|---|---|
| | **PCT/JP2024/006459** |

### A. CLASSIFICATION OF SUBJECT MATTER

*C08J 5/18*(2006.01)i; *B32B 7/025*(2019.01)i; *B32B 15/09*(2006.01)i; *B32B 27/36*(2006.01)i; *H01G 9/048*(2006.01)i; *H01G 11/68*(2013.01)i; *H01M 4/66*(2006.01)i
FI: C08J5/18 CFD; H01G11/68; H01G9/048 Z; B32B27/36; B32B15/09 Z; B32B7/025; H01M4/66 A

According to International Patent Classification (IPC) or to both national classification and IPC

### B. FIELDS SEARCHED

Minimum documentation searched (classification system followed by classification symbols)

C08J5/18; B32B7/025; B32B15/09; B32B27/36; H01G9/048; H01G11/68; H01M4/66; C08K3/00-13/08; C08L1/00-101/14; B29D7/01; B29C55/00-55/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-137939 A (SHOWA DENKO K.K.) 01 June 2006 (2006-06-01)<br>whole document, particularly, claims, paragraphs [0014], [0015], [0041], [0045]-[0052] | 1, 10 |
| X | JP 2007-231089 A (MITSUBISHI MATERIALS CORPORATION) 13 September 2007 (2007-09-13)<br>whole document, particularly, claims, paragraphs [0009], [0012]-[0022], [0029], [0035]-[0038] | 1, 2 |
| A | JP 2020-157651 A (MITSUBISHI CHEMICAL HOLDINGS CORP.) 01 October 2020 (2020-10-01)<br>whole document | 1-29 |
| A | JP 10-296889 A (TORAY IND., INC.) 10 November 1998 (1998-11-10)<br>whole document | 1-29 |

✓ Further documents are listed in the continuation of Box C.    ✓ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/006459** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 3-074465 A (HAIPIRION KATARISHISU INTERNATL. INC.) 29 March 1991 (1991-03-29)<br>whole document | 1-29 |
| A | JP 2014-114394 A (TEIJIN DUPONT FILMS JAPAN LTD.) 26 June 2014 (2014-06-26)<br>whole document | 1-29 |
| A | JP 2003-082202 A (TORAY IND., INC.) 19 March 2003 (2003-03-19)<br>whole document | 1-29 |
| A | JP 9-111135 A (MITSUBISHI MATERIALS CORPORATION) 28 April 1997 (1997-04-28)<br>whole document | 1-29 |
| A | JP 2012-041561 A (OSAKA GAS CO., LTD.) 01 March 2012 (2012-03-01)<br>whole document | 1-29 |

Form PCT/ISA/210 (second sheet) (July 2022)

## INTERNATIONAL SEARCH REPORT
### Information on patent family members

International application No.

**PCT/JP2024/006459**

| Patent document cited in search report | | | Publication date (day/month/year) | Patent family member(s) | | | Publication date (day/month/year) |
|---|---|---|---|---|---|---|---|
| JP | 2006-137939 | A | 01 June 2006 | WO 2006/041186 A1 whole document, particularly, claims, specification, page 38, lines 17-28, examples | | | |
| JP | 2007-231089 | A | 13 September 2007 | (Family: none) | | | |
| JP | 2020-157651 | A | 01 October 2020 | (Family: none) | | | |
| JP | 10-296889 | A | 10 November 1998 | US 6723400 B1 whole document | | | |
| | | | | WO 1998/026922 A1 | | | |
| | | | | EP 888880 A1 | | | |
| | | | | CA 2224948 A | | | |
| | | | | CN 1216021 A | | | |
| | | | | KR 10-0588588 B1 | | | |
| | | | | SG 166665 A | | | |
| | | | | SG 166666 A | | | |
| | | | | TW 375569 B | | | |
| | | | | CA 2224948 A1 | | | |
| JP | 3-074465 | A | 29 March 1991 | US 5643990 A | | | |
| | | | | WO 1991/003057 A1 | | | |
| | | | | EP 491728 A1 | | | |
| | | | | BR 9007593 A | | | |
| | | | | AT E150895 T | | | |
| | | | | CA 2065039 A | | | |
| | | | | KR 10-0164612 B | | | |
| | | | | AU 6291190 A | | | |
| | | | | CA 2065039 A1 | | | |
| JP | 2014-114394 | A | 26 June 2014 | (Family: none) | | | |
| JP | 2003-082202 | A | 19 March 2003 | (Family: none) | | | |
| JP | 9-111135 | A | 28 April 1997 | US 6184280 B1 whole document | | | |
| | | | | WO 1997/015934 A1 | | | |
| | | | | EP 857349 A1 | | | |
| | | | | AU 7334696 A | | | |
| | | | | CA 2235604 A | | | |
| | | | | KR 10-1999-0064112 A | | | |
| JP | 2012-041561 | A | 01 March 2012 | JP 2004-339499 A | | | |
| | | | | JP 2010-111876 A | | | |
| | | | | JP 2012-82427 A | | | |
| | | | | JP 2013-10971 A | | | |
| | | | | JP 2014-40615 A | | | |

Form PCT/ISA/210 (patent family annex) (July 2022)

## REFERENCES CITED IN THE DESCRIPTION

**Patent documents cited in the description**

- WO 2011092938 A
- JP 2019179732 A
- WO 2015005116 A